(19) Europäisches Patentamt
European Patent Office
Office européen des brevets

(11) **EP 2 807 634 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(51) Int Cl.:
**G06T 7/40** *(2017.01)*     **G06T 7/00** *(2017.01)*
**H04N 1/60** *(2006.01)*     **G06K 9/46** *(2006.01)*

(21) Anmeldenummer: **13700563.3**

(22) Anmeldetag: **16.01.2013**

(86) Internationale Anmeldenummer:
**PCT/EP2013/050693**

(87) Internationale Veröffentlichungsnummer:
**WO 2013/110529 (01.08.2013 Gazette 2013/31)**

(54) **VERFAHREN ZUR EINRICHTUNG EINER DEM OPTISCHEN IDENTIFIZIEREN VON OBJEKTEN DIENENDER ANLAGE, LABORBILDAUFNAHMESYSTEM ZUM DURCHFÜHREN EINES SOLCHEN VERFAHRENS UND ANORDNUNG UMFASSEND DAS LABORBILDAUFNAHMESYSTEM SOWIE DIE ANLAGE**

METHOD FOR PREPARING A SYSTEM WHICH IS USED TO OPTICALLY IDENTIFYING OBJECTS, LABORATORY IMAGE CAPTURING SYSTEM FOR CARRYING OUT SUCH A METHOD, AND ARRANGEMENT COMPRISING THE LABORATORY IMAGE CAPTURING SYSTEM AND THE SYSTEM

PROCÉDÉ D'AGENCEMENT D'UNE INSTALLATION SERVANT À IDENTIFIER OPTIQUEMENT DES OBJETS, SYSTÈME DE PRISE DE VUES DE LABORATOIRE POUR LA MISE EN ŒUVRE D'UN TEL PROCÉDÉ, ET INSTALLATION CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2012 DE 102012001868**

(43) Veröffentlichungstag der Anmeldung:
**03.12.2014 Patentblatt 2014/49**

(73) Patentinhaber: **FRAUNHOFER-GESELLSCHAFT zur Förderung der angewandten Forschung e.V. 80636 München (DE)**

(72) Erfinder: **VIETH, Kai-Uwe 76133 Karlsruhe (DE)**

(74) Vertreter: **Pfenning, Meinig & Partner mbB Patent- und Rechtsanwälte Theresienhöhe 11a 80339 München (DE)**

(56) Entgegenhaltungen:
**US-A1- 2001 048 765**

• **RAO XIUQUIN, YING YIBIN: "Color Model for Fruit Quality Inspection with Machine Vision", SPIE, PO BOX 10 BELLINGHAM WA 98227-0010 USA, Bd. 5996, 1. Januar 2005 (2005-01-01), XP040211825,**

• **LOREDANA LUNADEI ET AL: "Automatic Identification of Defects on Eggshell Through a Multispectral Vision System", FOOD AND BIOPROCESS TECHNOLOGY ; AN INTERNATIONAL JOURNAL, SPRINGER-VERLAG, NEW YORK, Bd. 5, Nr. 8, 25. August 2011 (2011-08-25) , Seiten 3042-3050, XP035127002, ISSN: 1935-5149, DOI: 10.1007/S11947-011-0672-X**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf ein Verfahren zum Einrichten einer dem optischen Identifizieren von vordefinierten Objekten dienenden Anlage (insbesondere einer Sortieranlage zum Sortieren von Objekten in Form von Schüttgut) auf die vordefinierten Objekte, auf ein Laborbildaufnahmesystem, das zum Durchführen eines solchen Verfahrens ausgebildet ist und auf eine Anordnung, die ein solches Laborbildaufnahmesystem und die Anlage umfasst.

Die US 2001/0048765 A1 beschreibt ein Verfahren zur Klassifizierung eines Produktes, das nicht-einheitliche Farbmuster aufweist. Dabei wird eine Vorrichtung mit Bilddaten, die von einer CCD-Farbkamera von einer Vielzahl von Referenzfarbprodukten aufgenommen werden, trainiert. Diese Bilddaten werden gespeichert, um Farbklassen und Subklassen zur Verfügung zu stellen.

"Colour Model for Fruit Quality Inspection with Machine Vision" von Xiuqen Rao und Yibin Ying in "Optical Sensors and Sensing Systems for Natural Resources and Food Safety and Quality, proc. of SPIE Vol. 5996, 59960S (2005) beschreibt ein Echtzeitaufnahmesystem für die Fruchtqualitätsinspektion. Dieses umfasst Rollen, einen Codierer, eine Lichtkammer und eine Kamera sowie einen Computer. Das System erkennt die Größe der Früchte und sortiert die Früchte dann entsprechend in drei Gruppen entsprechend ihrer Schalenfarbe (rote Gruppe, gelbe Gruppe und grüne Gruppe).

"Automatic Idenficiation of Defects on a Shell through a Multi-Spectral Vision System" von L. Loona, L. Ruiz-Garcia, L. Bodria und R. Guidetti in "Food Bioprocess Technol." (2012) 5:3042 - 3050 beschreibt ein Bilderkennungssystem um automatisch defekte Eierschalen zu erkennen, das heißt, schmutzige oder gebrochene Eierschalen. Dabei werden organische Rückstände auf Eierschalen wie beispielsweise Blut, Federn usw. erkannt. Auch können die Eierschalen entsprechend ihrer Farbe klassifiziert werden.

Objekte in Form von losen Schüttgütern, wie beispielsweise Tees, Kräuter, getrocknetes Gemüse, Mineralien usw. werden häufig mit Hilfe von optischen Inspektionsanlagen (nachfolgend auch als Sortieranlagen bezeichnet) sortiert. Dabei wird das zu sortierende Material (im Weiteren auch als eine Menge von Objekten bezeichnet, bei der vordefinierte Objekte, die nachfolgend auch als Gutprodukte bezeichnet werden, in einer Menge verschiedener Objekte - die nicht den Gutprodukten entsprechenden Objekte werden nachfolgend auch als Schlechtprodukte bzw. als Schlechtobjekte bezeichnet - identifiziert werden sollen) beispielsweise durch eine Vibrationsrinne, eine Rutsche oder ein Förderband transportiert und ggf. vereinzelt, so dass jedes einzelne Objekt des zu sortierenden Materialstroms von einer Flächen- oder Zeilenkamera erfasst wird und mit Hilfe von Bildverarbeitungssoftware ausgewertet wird. Das Auswerten ergibt eine Klassifizierung in unterschiedliche Klassen, im einfachsten Fall nur in eine Gut- und in eine Schlechtklasse. Die mechanische Trennung in verschiedene Klassen erfolgt meist durch pneumatische Ventile. Auch die nachfolgend noch beschriebene Anlage zum Identifizieren vordefinierter Objekte der vorliegenden Erfindung kann dem vorbeschriebenen Aufbau folgen.

Damit die Trennung in unterschiedliche Klassen erfolgen kann, muss die Anlage vor dem Durchführen der Objektidentifizierung bzw. der Sortierung eingelernt werden (dieses Einlernen wird nachfolgend alternativ auch als Einrichten der Anlage auf die zu identifizierenden, vordefinierten Objekte bezeichnet). Bei künstlichen Produkten, beispielsweise Kunststoffgranulaten, die immer dieselbe Form haben und sich lediglich in ihrer Farbe unterscheiden, ist ein automatisches Einlernen möglich. Bei natürlichen Produkten ist jedoch ein vollautomatisches Einlernen der Anlage auf die aufzufindenden vordefinierten Objekte im Produkt- bzw. Materialstrom in der Regel aufgrund der Komplexität der einzelnen Objekte (hinsichtlich Form, Farbe, ...) nicht möglich. So muss ein Anwender manuell vor Ort an der Anlage zum Einrichten derselben auf die zu identifizierenden Objekte (beispielsweise getrockneter Hibiskus-, Kamille- oder Brennnesselstücke, die von Fremdkörpern getrennt werden sollen) eingreifen und die Parameter der Sortiersoftware derart einstellen, dass die Anlage den wünschen des Anlagenbetreibers (Endkunde) entspricht.

Diese Aufgabe ist jedoch so komplex, dass Bedienpersonal, welches die Anlage in der Prozesskette bedienen soll, mit dem Einlernen bzw. Einrichten der Anlage in der Regel überfordert ist: So sind beim Sortieren nicht nur aus dem Produktstrom (beispielsweise: Brennnesselblätter) Fremdkörper, wie z.B. Insekten, Plastikteilchen, Papier, ..., zu entfernen, sondern andererseits zum Teil auch produkteigene Objekte, wie beispielsweise zu lange Brennnesselstiele. Desweiteren ist zu berücksichtigen, dass in Abhängigkeit der Trennschärfe der Anteil an guten Objekten bzw. vordefinierten Objekten, die irrtümlich aussortiert werden, zunimmt, je mehr Wert darauf gelegt wird, dass auch wirklich alle Fremdkörper und unerwünschten produkteigenen Objekte mit Hilfe von pneumatischen Ventilen aus dem Produktstrom ausgeschleust werden. Diese Kriterien unter Berücksichtigung der Wünsche des Anlagenbetreibers führen dazu, dass das Einlernen ein sehr komplexer Vorgang ist, der, wie die Erfahrung gezeigt hat, dazu führt, dass die Anlagen für ein optimales Sortieren in der Regel nicht korrekt eingelernt werden können. Folglich schöpfen die Anlagenbetreiber in der Regel nicht das volle Potential der Sortierung aus, sondern erhalten suboptimale Sortierergebnisse, z.B. nicht ausreichend gereinigte Produkte. Dennoch folgt im Stand der Technik ein Einlernen des Bedienpersonals der Anlagen dadurch, dass entsprechendes Schulungspersonal der Hersteller der Anlagen vor Ort zusammen mit dem Bedienpersonal an der Anlage selbst das Einrichten der Anlage auf die zu identifizierenden, vordefinierten Objekte (Gutprodukte) vornimmt. Dazu werden die Gutprodukte und Schlechtprodukte, bei denen es sich bevorzugt um häufig im Produktstrom der Gutprodukte auftretende Fremdkörper handelt, direkt mit dem Bildaufnahme- und Bildverarbeitungssystem der Anlage erfasst und ausgewertet. Anhand dieser mit der optischen Erfassungsvorrichtung (in der Regel: Kamera) der Anlage erfassten Bilder werden dabei Farbverteilungen eingelernt und die Werte geometrischer Parameter definiert. Dabei kann das Einlernen am Rechnersystem der Anlage selbst oder an einem damit über ein Netzwerk verbundenen Büro-PC vorgenommen werden. Ausgangspunkt des Einrichtens der Anlage sind dabei jedoch immer die zuvor mit der optischen Erfassungsvorrichtung der Anlage aufgenommenen Bilder der Objekte.

Im Stand der Technik existieren zudem Sortieranlagen, die ausschließlich zum Sortieren von Produkten dienen, die immer gleich sind oder deren Variationen vorbekannt sind. In diesem Fall ist es aus dem Stand der Technik auch bekannt, die Sortieranlage herstellerseitig auf die Produkte bzw. deren Variationen einzustellen, indem z.B. für die Zahl vorbekannter Produktvarianten jeweils spezielle Parametersätze herstellerseitig in der Bildverarbeitungssoftware der Sortieranlagen verankert werden.

Sobald jedoch mit der entsprechenden Sortieranlage ein neues Produkt sortiert werden soll, so tritt auch hier das bereits vorbeschriebene Problem auf: Der Betreiber der Anlage muss die Herstellerfirma der Anlage kontaktieren und über diese das neue Produkt einlernen lassen, indem vor Ort an der Sortieranlage Aufnahmen von den Gut- und den Schlechtobjekten gemacht werden, die dann anschließend als Basis zum Einrichten der Anlage auf das neue Produkt dienen. Es sei denn, dass der Hersteller eine Reproduktion der Anlage besitzt, die insbesondere hinsichtlich bildaufnahmeabhängiger Parameter, z. B. Beleuchtung, geometrischer Auflösung, vergleichbar oder identisch ist.

Aufgabe der vorliegenden Erfindung ist es daher, ausgehend vom Stand der Technik ein Verfahren zum Einrichten einer solchen Anlage sowie Vorrichtungen, mit denen das entsprechende Verfahren durchgeführt werden kann (insbesondere, siehe nachfolgend, ein entsprechend ausgebildetes Laborbildaufnahmesystem und eine entsprechende Anordnung aus einem solchen sowie der Anlage) zur Verfügung zu stellen, mit denen ein Einrichten der Anlage auf zu identifizierende, vordefinierte Objekte (Gutprodukte) auf eine einfache Art und Weise, für unterschiedliche Typen von vordefinierten Objekten und nicht diesen Objekten entsprechenden anderen Objekten (Schlechtprodukte) und auch für Anlagen, die vor Ort durch gering qualifiziertes Bedienpersonal bedient werden, erfolgen kann. Aufgabe ist es darüberhinaus insbesondere, die Sortierqualität an Sortieranlagen durch die vorliegende Erfindung zu erhöhen. Ein diese Aufgabe lösendes erfindungsgemäßes Verfahren ist im Anspruch 1 beschrieben. Ein entsprechend ausgebildetes Laborbildaufnahmesystem im Anspruch 12. Eine erfindungsgemäße Anordnung ist im Anspruch 13 beschrieben, eine erfindungsgemäße Anlage im Anspruch 14. Erfindungsgemäße Verwendungen sind im Anspruch 15 beschrieben. Vorteilhafte Ausführungsformen lassen sich dabei jeweils den abhängigen Ansprüchen entnehmen.

Nachfolgend wird die vorliegende Erfindung zunächst allgemein, dann anhand eines konkreten Ausführungsbeispiels beschrieben. Die beim Ausführungsbeispiel in Kombination miteinander auftretenden Einzelmerkmale bzw. einzelnen Bauelemente der Anlage und des Laborbildaufnahmesystems müssen dabei im Rahmen der vorliegenden Erfindung nicht genau in der gezeigten Konfiguration verwirklicht sein, sondern können auch auf andere Art und Weise miteinander kombiniert werden. Insbesondere können einzelne der gezeigten Merkmale bzw. Bauelemente auch weggelassen werden oder mit anderen Merkmalen bzw. Bauelementen auch auf andere Art und Weise zusammengeschaltet werden. Insbesondere können auch bereits einzelne der gezeigten Merkmale für sich Verbesserungen des Standes der Technik darstellen.

Das erfindungsgemäße Verfahren ist dabei nicht nur auf künstliche, sondern insbesondere auch auf natürliche Objekte bzw. Sortierprodukte anwendbar. Die zum Einrichten verwendeten Objekte bzw. die vordefinierten Objekte oder Gutprodukte der vorliegenden Erfindung umfassen somit alle Objekte im anschließenden Sortiervorgang, die teilweise oder vollständig die beim Einrichten verwendeten Merkmale besitzen (bspw. Farbe, Geometrie und/oder Textur). Die im sich anschließenden Sortiervorgang als Gutprodukte bzw. objekte zu erfassenden Objekte können somit von den beim Einrichten (bzw. beim Aufnehmen im Laborbildaufnahmesystem) verwendeten Objekten auch geringfügig abweichen, sofern nur die vorstehend genannte teilweise oder vollständige Übereinstimmung der Merkmale gegeben ist. Auch wenn beim Sortieren natürlicher Produkte als Objekte somit die nach dem Einrichten sortierten Objekte nie genau so aussehen wie beim Einrichten, umfasst der Begriff der vordefinierten Objekte bei der vorliegenden Erfindung somit die Menge all dieser Gutobjekte.

Wird nachfolgend von farbnormierten Farbelementen gesprochen, so handelt es sich hierbei um körperliche, für die Aufnahme mit einer optischen Erfassungsvorrichtung (Kamera) geeignete Elemente, deren äußere Oberfläche so ausgebildet ist, dass ihnen bei geeigneter diffuser Ausleuchtung auf Basis dieser Aufnahme mit der Kamera jeweils genau ein definierter Farbwert (Farbtupel) eines definierten Farbraumes (z.B. des Rot-Grün-Blau-Farbraums - nachfolgend auch als RGB-Farbraum bezeichnet) zugeordnet werden kann. (Gegebenenfalls erfolgt hierzu eine Mittelung über die entsprechenden Bildpixel einer Mehrzahl von Kameraaufnahmen).

Unter einem Farbwert wird nachfolgend ein Tupel (z.B. Tripel dreier einzelner Werte, eines Grünwerts G, eines Rotwerts R und eines Blauwerts B des RGB-Farbraums) verstanden. Bei einem Farbwert handelt es sich somit in der Regel um einen vektoriellen Wert.

Die Farbwerte müssen sich bei der vorliegenden Erfindung jedoch nicht auf das sichtbare Licht beziehen, die vorliegende Erfindung kann ebenfalls im UV-Wellenlängenbereich oder auch im nahen Infrarot-Wellenlängenbereich realisiert sein. Dabei sind dann die Lichtquellen, die Kameras, die Objektive und ggf. verwendete Filter (siehe nachfolgend) entsprechend anzupassen.

Ein Verfahren zum Einrichten einer dem optischen Identifizieren vordefinierter Objekte (Gutobjekte) dienenden Anlage auf diese vordefinierten Objekte umfasst die folgenden Schritte: Mithilfe einer optischen Erfassungsvorrichtung eines Laborbildaufnahmesystems und einer optischen Erfassungsvorrichtung der in der Regel getrennt vom Laborbildaufnahmesystem ausgebildeten und positionierten Anlage - das Laborbildaufnahmesystem kann jedoch zusammen mit der Anlage auch eine gemeinsame Anordnung ausbilden - wird eine Farbtransformation zwischen Farbwerten im Laborbildaufnahmesystem (nachfolgend auch als Laborsystem-Farbwerte bezeichnet) und den zugehörigen Farbwerten der Anlage (nachfolgend auch als Anlagen-Farbwerte bezeichnet) bestimmt. Die Farbtransformation kann beispielsweise in Form einer Tabelle in einem Rechnersystem des Laborbildaufnahmesystems abgelegt werden. Die Gutobjekte werden mit der optischen Erfassungsvorrichtung des Laborbildaufnahmesystems zumindest einmalig aufgenommen (in der Regel erfolgt eine mehrmalige Aufnahme und eine entsprechende Mittelwertbildung, ggf. auch unter Herausrechnen des Bildhintergrundes).

Die Aufnahme(n) der Gutobjekte wird/werden der bestimmten Farbtransformation unterworfen. Nach der Farbtransformation werden dann in der/den transformierten Aufnahme(n) eine oder mehrere die Farbe der Gutobjekte betreffende Eigenschaft(en) bestimmt. Alternativ dazu (oder auch in Kombination damit) können in der/den Aufnahme(n) der Gutobjekte (also in den noch nicht transformierten Aufnahmen) auch eine oder mehrere die Farbe der vordefinierten Objekte betreffende Eigenschaft(en) bestimmt werden und diese bestimmte(n) Eigenschaft(en) dann der Farbtransformation unterworfen werden.

Bevorzugt erfolgt dabei das Durchführen der Farbtransformation im Laborbildaufnahmesystem (z.B. im Rechnersystem desselben durch ein geeignetes Farbtransformationsprogramm). Danach kann/können ebenfalls im Laborbildaufnahmesystem in der/den transformierten Aufnahme(n) die eine oder mehreren die Farbe der Gutobjekte betreffende(n) Eigenschaft(en) bestimmt werden. Auch dies kann im Rechnersystem des Laborbildaufnahmesystems durch eine geeignete Bildverarbeitungssoftware durchgeführt werden. Erfolgen die vorbeschriebenen Berechnungen im Laborbildaufnahmesystem, so werden anschließend die bestimmten Eigenschaften vom Laborbildaufnahmesystem an die Anlage übermittelt (über geeignete Datenleitungen oder auch drahtlos - Laborbildaufnahmesystem und Anlage können daher an unterschiedlichen Orten getrennt voneinander angeordnet sein).

Alternativ dazu ist es jedoch auch möglich, mit dem Laborbildaufnahmesystem lediglich die Aufnahmen der Gutobjekte durchzuführen und diese Aufnahmen dann (über eine Datenleitung oder drahtlos) an die Anlage zu übermitteln. In diesem Fall kann das Durchführen der Farbtransformation der Aufnahmen sowie das Bestimmen der vorgenannten Eigenschaften der Gutobjekte in der Anlage selbst erfolgen. (Es entfällt in diesem Fall die Übermittlung der bestimmten Eigenschaften an die Anlage, allerdings müssen stattdessen die in der Regel einen höheren Speicherbedarf aufweisenden Aufnahmen an die Anlage übermittelt werden.)

Alternativ zum Vorgesagten (oder auch in Kombination damit) ist es auch möglich, erfindungsgemäß die im Laborbildaufnahmesystem in der/den Aufnahme(n) der Gutobjekte bestimmte(n) Eigenschaft(en) im Laborbildaufnahmesystem der Farbtransformation zu unterwerfen (es müssen also nicht die vollständigen Aufnahmen der Farbtransformation unterworfen werden) und anschließend die so transformierte(n) Eigenschaft(en) vom Laborbildaufnahmesystem an die Anlage zu übermitteln.

In einer weiteren vorteilhaften Ausführungsform werden mit dem erfindungsgemäßen Verfahren auch andere Objekte (Schlechtobjekte) als die vordefinierten Objekte bzw. Gutobjekte mit der optischen Erfassungsvorrichtung des Laborbildaufnahmesystems ein- oder mehrfach aufgenommen. Auch die daraus erhaltenen (ggf. gemittelten) Aufnahmen der Schlechtobjekte können (bevorzugt ebenfalls im Laborbildaufnahmesystem) der Farbtransformation unterworfen werden. In den transformierten Aufnahmen wird/werden dann (bevorzugt im Laborbildaufnahmesystem) auch eine oder mehrere die Farbe der Schlechtobjekte betreffende(n) Eigenschaft(en) bestimmt. Sofern das Transformieren sowie das Bestimmen der Eigenschaften im Laborbildaufnahmesystem erfolgt ist, werden die so bestimmten, die Farbe der Schlechtobjekte betreffenden Eigenschaften vom Laborbildaufnahmesystem ebenfalls an die Anlage übermittelt (werden diese vorgenannten Schritte nicht im Laborbildaufnahmesystem, sondern in der Anlage selbst durchgeführt, also lediglich die aufgenommenen Bilder der Schlechtobjekte an die Anlage übermittelt, so entfällt die Übermittlung der Eigenschaften an die Anlage). Alternativ dazu (oder auch in Kombination damit) ist es ebenfalls möglich, in der/den Aufnahme(n) der Schlechtobjekte, die noch nicht farbtransformiert ist/sind, eine oder mehrere die Farbe der Schlechtobjekte betreffende Eigenschaft(en) zu bestimmen. Auch dies geschieht bevorzugt im Laborbildaufnahmesystem. Die so bestimmte(n) Eigenschaft(en) kann dann (ebenfalls bevorzugt im Laborbildaufnahmesystem) der Farbtransformation unterworfen werden, so dass auch hier die Farbtransformation der gesamten Aufnahmen nicht unbedingt notwendig ist. Die farbtransformierte(n) Eigenschaft(en) kann/können dann, sofern dies notwendig ist, also die entsprechende Verarbeitung im Laborbildaufnahmesystem erfolgt ist, an die Anlage übermittelt werden.

In jedem Fall ist es der Anlage damit ermöglicht, anhand sowohl der Eigenschaften der Gutobjekte als auch der Eigenschaften der Schlechtobjekte zwischen den Gutobjekten und den Schlechtobjekten zu differenzieren (die Eigenschaften können bereits in Form von Steuerparametern für die Anlage übermittelt werden oder es werden vor Ort in der Anlage nach Übertragung der Eigenschaften der beiden Objekttypen entsprechende Steuerparameter automatisch berechnet).

Neben den die Farben der Gutobjekte und der Schlechtobjekte betreffenden Eigenschaften können im Rahmen der vorliegenden Erfindung zusätzlich auch geometrische Kenngrößen der Gutobjekte und/oder der Schlechtobjekte (bzw. diese betreffende Eigenschaften) in den farbtransformierten und/oder nicht-farbtransformierten Aufnahmen bestimmt werden und (sofern die entsprechende Bestimmung in den vom Laborbildaufnahmesystem aufgenommenen Aufnahmen vor Ort in diesem System erfolgt) ebenfalls an die Anlage übermittelt werden. Bei solchen geometrischen Kenngrößen kann es sich beispielsweise um eine Ausdehnung der Gut- und/oder Schlechtobjekte in einer vordefinierten Richtung, eine maximale Ausdehnung der Gut- und/oder der Schlechtobjekte und/oder eine Fläche der Gut- und/oder Schlechtobjekte handeln.

Erfindungsgemäß kann die Farbtransformation zwischen dem Farbraum des Laborbildaufnahmesystems und dem Farbraum der Anlage bzw. zwischen den beiden optischen Erfassungsvorrichtungen wie folgt bestimmt werden: Mit der optischen Erfassungsvorrichtung des Laborbildaufnahmesystems wird eine vordefinierte Anzahl n (z.B. n = 256) von unterschiedlichen, also in ihrer Farbe nicht übereinstimmenden Farbelementen erfasst. Für jedes dieser Farbelemente wird aus der entsprechenden Aufnahme ein zugehöriger Laborsystem-Farbwert, beispielsweise in Form eines Farbwertvektors $(RL, GL, BL)$ im RGB-Farbraum des Laborbildaufnahmesystems bestimmt. Exakt diese Farbelemente werden dann ebenfalls mit der optischen Erfassungsvorrichtung der Anlage (vorzugsweise unter identischen Aufnahmebedingungen, also z.B. derselben Lichtquelle, wie bei der Aufnahme im Laborbildaufnahmesystem) ebenfalls aufgenommen und es werden die diesen Farbelementen jeweils entsprechenden Anlagen-Farbwerte im Farbraum des Anlagensystems (der z.B. ebenfalls als RGB-Farbraum gewählt werden kann) bestimmt. Vorzugsweise werden im Laborbildaufnahmesystem und im System der Anlage dieselben Farbräume (z.B. RGB-Farbraum) gewählt, es können jedoch auch unterschiedliche Farbräume gewählt werden, wobei dann entsprechende Umrechnungen notwendig werden, wie sie beispielsweise in http://www.brucelindbloom.com/Eqn_RGB_XYZ_Matrix.html oder http://www.babelcolor.com/ beschrieben sind, durchgeführt werden.

Die n so bestimmten Laborsystem-Farbwerte und die n so bestimmten Anlagen-Farbwerte werden einander in einer in der Regel eineindeutigen Zuordnung zugeordnet (beispielsweise in Form einer in einem Speicher ablegbaren Tabelle). Ausgehend von dieser eineindeutigen Zuordnung zwischen dem Farbraum des Laborbildaufnahmesystems einerseits und dem Farbraum des Systems der Anlage andererseits wird dann die Farbtransformation zwischen Laborsystem-Farbwerten und Anlagen-Farbwerten beispielsweise auf Basis eines Interpolationsverfahrens und/oder Extrapolationsverfahrens bestimmt. Die mit den optischen Erfassungsvorrichtungen sowohl des Laborbildaufnahmesystems als auch der Anlage aufgenommenen Farbelemente können farbnormierte Farbelemente, insbesondere farbnormierte keramische Farbkacheln (z.B. die Farbkacheln des Gretag Macbeth ColorChecker®) sein.

Erfindungsgemäß ist es somit (ausgehend von der gegenseitigen, in der Regel eineindeutigen Zuordnung der n Laborsystem- und der n Anlagen-Farbwerte der Farbelemente) für eine Vielzahl von keiner Farbe eines der Farbelemente entsprechenden Farbzwischenwerten möglich, mittels eines Interpolationsverfahrens und/oder Extrapolationsverfahrens die gegenseitige Zuordnung zwischen Laborsystem-Farbwert- und Anlagen-Farbwert zu ermitteln. Als Farbtransformation kann dann die Menge aller gegenseitig zugeordneten Laborsystem-Farbwerte und Anlagen-Farbwerte von den aufgenommenen Farbelementen und von den daraus interpolierten und/oder extrapolierten Zwischenwerten verwendet werden. Die Farbtransformation kann dabei in Form einer Look-Up-Tabelle im Speicher der Anlage und/oder im Speicher des Laborbildaufnahmesystems hinterlegt werden.

Die mittels Interpolation/Extrapolation bestimmten Zwischenwerte der Farbtransformation decken dabei bevorzugt zusammen mit den Werten der Farbelemente alle theoretisch möglichen Farbwerte eines Farbraums (z.B. die $256^3$-Farbwerte eines RGB-Farbraums) ab.

Als Interpolationsverfahren können trilineare Interpolationsverfahren, prismenbasierte Interpolationsverfahren oder auch tetraedrische Interpolationsverfahren, wie sie beispielsweise in "Performing color space conversions with three-dimensional linear interpolation", Journal of Electronic Imaging 4 (3), 226-250 (July 1995) der Autoren J. M. Kasson, S. I. Nin, W. Plouffe und J. L. Hafner beschrieben sind, eingesetzt werden (siehe insbesondere die Kapitel 2.1, 2.2 und 2.3 dieses Artikels in Verbindung mit den zugehörigen Berechnungsvorschriften des Anhangkapitels 8 des Artikels; die Koordinaten $(x_i, y_j, z_k)$ entsprechen dabei den n Laborsystem-Farbwerten, die Koordinaten $(r, s, t)$ den Zwischenwerten im Laborsystem und die z.B. für die drei Farben R, G und B des RGB-Farbraums jeweils zu bestimmende Funktion F dem entsprechenden Farbwert für Rot, Grün und Blau im System der Anlage). Als Extrapolationsverfahren kann ein Verfahren eingesetzt werden, bei dem der zu extrapolierende Wert auf Basis von mindestens drei nächstgelegenen Referenzwerten, gewichtet durch ihre euklidische Distanz, bestimmt wird.

Vorzugsweise sind somit beim erfindungsgemäßen Verfahren die Laborsystem-Farbwerte Farbwert-Tupel eines ersten Farbraums und die Anlagen-Farbwerte Farbwert-Tupel eines zweiten Farbraums, wobei der erste und der zweite Farbraum identisch sind und vorzugsweise dem RGB-Farbraum entsprechen. Falls die beiden Farbräume nicht identisch sind, ist es bevorzugt, dass der erste Farbraum einen größeren Gamut besitzt als der zweite Farbraum.

Vorteilhafterweise wird beim erfindungsgemäßen Verfahren vor dem Bestimmen der Farbtransformation (und der darauf basierenden Bestimmung der die Farbe der Objekte betreffenden Eigenschaften) die Anlage und/oder das Laborbildaufnahmesystem, bevorzugt beide, kalibriert. Das Kalibrieren kann dadurch erfolgen, dass mit der optischen Erfassungsvorrichtung des Laborbildaufnahmesystems und mit der optischen Erfassungsvorrichtung der Anlage jeweils ein Weißabgleich (und bevorzugt darüberhinaus jeweils auch eine Dunkelstromkorrektur) durchgeführt wird.

Die bestimmten, die Farbe der vordefinierten Objekte und/oder der Schlechtobjekte betreffenden Eigenschaften können beim erfindungsgemäßen Verfahren Farbwert-Häufigkeitsverteilungen in Bildbereichen sein, die den vordefinierten Objekten bzw. den Schlechtobjekten entsprechen (die Bildbereiche können in den Aufnahmen der optischen Erfassungsvorrichtungen des Laborbildaufnahmesystems und/oder der Anlage mittels bekannter Bildverarbeitungsverfahren, beispielsweise über Kantendetektionen, bestimmt werden). Diese Häufigkeitsverteilungen können, ggf. zusammen mit daraus abgeleiteten Parametern (beispielsweise Farbmittelwerte, Farbmedianwerte, auf Basis der Häufigkeitsverteilungen festgelegte Farbintervalle, Farbschwellwerte und/oder Farbgrenzwerte von Gutobjekten einerseits und Schlechtobjekten andererseits) vom Laborbildaufnahmesystem an die Anlage übermittelt werden und dort gespeichert werden. Anhand dieser in der Anlage gespeicherten Eigenschaften kann dann die Differenzierung von Gut- und Schlechtobjekten mit Hilfe von dem Fachmann an sich bekannten Verfahren (beispielsweise: Bayes'schen Klassifikationsverfahren) erfolgen. Ein entsprechendes farbwerthäufigkeitsverteilungsbasiertes Differenzierungsverfahren, das im Rahmen der vorliegenden Erfindung eingesetzt werden kann, ist beispielsweise in der EP 0 661 108 B1 beschrieben und soll hier so zusammengefasst dargestellt werden, wie es erfindungsgemäß eingesetzt werden kann:

In einem ersten Schritt wird der Hintergrund bevorzugt durch eine RGB-Kamera aufgenommen, bevorzugt mehrfach, um anschließend mit Hilfe der Aufnahmen ein Histogramm zu erstellen. Dieses Histogramm repräsentiert den Hintergrund derart, dass bei jeder Aufnahme des Hintergrunds gezählt wird wie häufig eine RGB-Farbkombination auftritt. Anschließend werden das/die Gutprodukt(e) und das/die Schlechtprodukt(e) mit derselben RGB-Kamera separat in möglichst großer Zahl aufgenommen, woraus Gutprodukt- und Schlechtprodukthistogramme erstellt werden. Das Hintergrundhistogramm wird als gut klassifiziert, da ansonsten bei einer Sortieranlage die Ausschleusung immer dann erfolgen würde, wenn die Kamera den Hintergrund aufnimmt, unter der Annahme, dass eine Ausschleusung nur von Schlechtteilen stattfindet, was prinzipiell auch genau umgekehrt definiert werden kann. Auf der Basis der Histogramme erfolgt die Klassifikation so, dass ein Pixel, welches ein RGB-Farbtripel besitzt, das sowohl im Gutprodukthistogramm als auch im Schlechtprodukthistogramm einen Wert größer 0 hat, der Klasse zugewiesen wird, dessen Histogramm einen größeren Wert besitzt. Anders ausgedrückt bedeutet dies, dass die Histogramme Wahrscheinlichkeiten widerspiegeln und somit eine Klassifizierung in Gut- und Schlechtprodukt erst auf Pixelebene und anschließend auf Objektebene, aufgrund zusammenhängender Regionen, erfolgt.

Die erfindungsgemäße Variante, bei der in der/den (nicht-farbtransformierten, im Laborbildaufnahmesystem aufgenommenen) Aufnahme(n) eine oder mehrere die Farbe der vordefinierten Objekte betreffende Eigenschaft(en) bestimmt wird/werden und diese bestimmte(n) Eigenschaft(en) der Farbtransformation unterworfen wird/werden kann insbesondere auch wie folgt realisiert werden.

Nachdem mit dem Laborbildaufnahmesystem Aufnahmen erzeugt wurden, werden die die Farbe betreffenden Eigenschaften von Objekten bestimmt. Beispielsweise kann es sich bei diesen Eigenschaften um Farbwerthäufigkeitsverteilungen, also Histogramme, handeln. Werden solche Häufigkeitsverteilungen in den ursprünglichen, nicht-farbtransformierten Aufnahmen bestimmt, so dient dies dazu herauszufinden, welche Farben charakteristisch für die vordefinierten Objekte bzw. die Gutobjekte sind. Darauf basierend können Klassen erstellt werden. Im einfachsten Fall handelt es sich bei diesen Klassen um zwei Klassen, nämlich eine Klasse für die vordefinierten Objekte bzw. Gutobjekte und eine Klasse für andere Objekte bzw. Schlechtobjekte. Es können jedoch auch mehr als zwei Klassen definiert werden, z.B. zusätzlich zu den beiden genannten auch Klassen dafür, ob die abgebildeten Objekte bestimmte Bildmerkmale aufweisen oder nicht (beispielsweise ob beim Sortieren von Kamilleblättern die erkannten Objekte Stiele oder auch Kelchblätter aufweisen oder nicht). Es kann dann entschieden werden, wie groß der Prozentanteil z.B. an Kelchblättern pro erkanntem Objekt sein muss, damit das Objekt als Gutobjekt erkannt wird oder nicht (entsprechend kann beim Überschreiten eines prozentualen Anteils-der beispielsweise in Form eines Flächenanteils im Bild bestimmt werden kann - am Objekt, dem die Eigenschaft "Stiel" zuzuweisen ist, das erkannte Objekte als Schlechtobjekt ausgesondert werden).

Durch das Erstellen solcher Klassen kann der komplette Farbraum in Klassen eingeteilt werden. Somit hat ein bestimmtes Farbtripel (beispielsweise RGB-Tripel) das Attribut "gut" oder "schlecht" (zusätzlich ggf. auch das Attribut "Stiel", "Kelchblatt",...).

Die die Farbe des Objekts (beispielsweise: Farbwert-Häufigkeitsverteilung) betreffende Eigenschaft kann, da sie wie eine komplette Aufnahme (die als zweidimensionales Array von Farbtripeln angesehen werden kann, wobei jedes einzelne Farbtripel dieses Arrays bzw. dieser Menge der Farbtransformation unterworfen wird) ebenfalls als Menge von Farbtripeln angesehen werden kann (beispielsweise im Fall eines Histogramms als Menge all derjenigen theoretisch möglichen Farbtripel, die in der Aufnahme auch tatsächlich auftreten, also im Histogramm einen Zählwert $\geq 1$ zugeordnet bekommen), ebenso wie eine Aufnahme besagter Farbtransformation unterworfen werden. Nicht nur die Aufnahmen selbst, sondern auch aus diesen Aufnahmen bestimmte, die Farbe der Objekte betreffende Eigenschaften, können somit der Farbtransformation unterworfen werden.

Es kann somit beispielweise eine Look-Up-Tabelle erzeugt werden, die eine Zuordnung für alle Farbtripel zu besagten Attributen durchführt. Diese Look-Up-Tabelle ist eine Attribut- oder Klassifikations-Look-Up-Tabelle. Eine solche Attribut- oder Klassifikations-Look-Up-Tabelle kann mithilfe der Farbtransformation für die Nutzung an der Sortieranlage transformiert werden.

Da die Farbtransformation die Zuordnung der Werte "Farbtripel im Laborbildaufnahmesystem" zu den Werten "Farbtripel in der Sortieranlage" ebenfalls in Form einer Transformations-Look-Up-Tabelle beschreiben kann, lässt sich die vorliegende Erfindung praktisch auch dadurch umsetzen, dass die Transformations-Look-Up-Tabelle auf die Klassifikations-Look-Up-Tabelle angewendet wird.

Zusätzlich zu diesem Einsatz farbbasierter Parameter zur Differenzierung von Gut- und Schlechtobjekten können weitere, aus geometrischen Analysen der aufgenommenen (und farbtransformierten) Bilder gewonnene geometrische Parameter eingesetzt werden.

Vorteilhafterweise handelt es sich sowohl bei der optischen Erfassungsvorrichtung des Laborbildaufnahmesystems als auch bei derjenigen der Anlage um eine Kamera, vorzugsweise um eine CCD-Kamera oder eine CMOS-basierte Kamera.

Ein zum Durchführen eines der vorbeschriebenen Verfahren gemäß der Erfindung ausgebildetes Laborbildaufnahmesystem umfasst neben einer optischen Erfassungsvorrichtung einen Dateneingang, über den dem Laborbildaufnahmesystem von der Anlage Daten übermittelt werden können, insbesondere von der optischen Erfassungsvorrichtung der externen Anlage z.B. die erfassten Bilddaten übermittelt werden können. Die Übermittlung kann drahtlos oder drahtgebunden und/oder über ein Netzwerk (insbesondere über das Internet) erfolgen. Das Laborbildaufnahmesystem umfasst desweiteren einen Datenausgang, mit dem z.B. die eine oder mehrere die Farbe der Objekte (Gutobjekte, bevorzugt Gut- und Schlechtobjekte) betreffende Eigenschaft(en) und/oder die Aufnahme(n) der Gut- und/oder der Schlechtobjekte vom Laborbildaufnahmesystem an die externe Anlage übermittelt werden können. Zudem umfasst das Laborbildaufnahmesystem eine mit dessen optischer Erfassungsvorrichtung, dem Dateneingang und dem Datenausgang verbundene mikroprozessorbasierte Recheneinheit (beispielsweise: PC) zum Bestimmen der Farbtransformation, zum Anwenden derselben auf die mit der optischen Erfassungsvorrichtung des Laborbildaufnahmesystems gemachte Aufnahme(n) und/oder auf die die Farbe der Objekte betreffende(n) Eigenschaft(en) und zum Bestimmen der die Farbe der Objekte betreffenden Eigenschaft(en) in den farbtransformierten und/oder den ursprünglichen, nicht-farbtransformierten Aufnahmen. Dateneingang und Datenausgang können dabei für eine bidirektionale, kabelgebundene Internetverbindung oder auch für eine Bluetooth-Verbindung geeignet sein. Die Übertragung der notwendigen Daten vom Laborbildaufnahmesystem an die Anlage kann somit über das Internet erfolgen, so dass ein Aufspielen der im Laborbildaufnahmesystem gewonnenen Steuerinformationen bzw. -parameter zum Einrichten der Anlage per Fernwartung erfolgen kann. Selbstverständlich ist es jedoch auch möglich, den Datenein- und Datenausgang des Laborbildaufnahmesystems in Form eines Datenträgers, wie beispielsweise einer portablen Festplatte oder dergleichen, auszubilden. Das Übermitteln der notwendigen Daten kann dann durch Austausch des mobilen Datenträgers zwischen dem Laborbildaufnahmesystem und der Anlage erfolgen.

Eine erfindungsgemäße Anordnung beinhaltet die Funktionalität des vorbeschriebenen Laborbildaufnahmesystems sowie der vorbeschriebenen Anlage. Die Implementierung der einzelnen Schritte des Verfahrens kann dabei je nach Bedarf teilweise in einem Speicher des Laborbildaufnahmesystems und in einem Speicher der Anlage erfolgen.

Ebenso kann jedoch eine erfindungsgemäße Anlage (insbesondere: eine Sortieranlage) z.B. in einem einzigen Rechnersystem derselben ein Programm zum Durchführen sämtlicher Schritte eines der vorstehend beschriebenen Verfahren implementieren.

Das Laborbildaufnahmesystem kann eine ein homogenes, diffuses Licht (bei dem es sich bevorzugt um weißes Licht handelt) erzeugende Lichtquelle aufweisen, mit der die Objekte und/oder die Farbelemente (Farbkacheln) beleuchtet werden. Bei einer solchen Lichtquelle kann es sich um eine Ring- oder Flächen- oder Zeilenbeleuchtung oder um eine halbe beleuchtete Ulbricht-Kugel handeln.

Dabei muss nicht das gesamte Lichtspektrum (z.B. Weißlichtspektrum) zu ein und demselben Zeitpunkt geschaltet werden, sondern es können nacheinander unterschiedlich Lichtspektren geschaltet werden (z.B. kann anstelle von Weißlicht auch nacheinander verschiedenfarbiges Licht, z.B. Rot, Grün, Blau, geschaltet werden). Anschließend kann das Ergebnis der Einzelschaltungen aufsummiert werden.

Erfindungsgemäße Verwendungen betreffen das Sortieren von Objekten in Form eines opaken, transparenten oder auch semitransparenten Schüttgutstroms (beispielsweise: Lebensmittel, Mineralien, Edelsteine, Glas, Kunststoff oder Schrott).

Erfindungsgemäß wird somit ein Laborbildaufnahmesystem in Kombination mit entsprechenden Bildverarbeitungsalgorithmen vorgeschlagen, die es ermöglichen, im Labor (also mit diesem Aufnahmesystem) erzeugte Aufnahmen von Gut- und Schlechtmaterialien zum Einlernen zu verwenden und zwar insbesondere durch die Farbtransformation vom Laborsystem auf die Anlage bzw. das Sortiersystem.

Farbwerte können dabei durch die Kombination von Lichtquelle, einem abzubildenden Objekt selbst und einer optischen Erfassungsvorrichtung (z.B. Zeilen- oder Flächenkamera) entstehen. Dabei weisen die optischen Erfassungsvorrichtungen bzw. Kameras einen Einfluss auf die Farbwerte durch ihr Objektiv, eventuell eingesetzte Farbfilter vor die Bildsensoren und den Bildsensoren (z.B. CCD-Sensoren) selbst auf. Alle hier genannten Einflussfaktoren besitzen eine eigene spektrale Charakteristik, die jeweils beeinflusst, wie die Farbe des jeweils abgebildeten Objekts registriert wird.

Das Laborbildaufnahmesystem kann aus einer digitalen Flächenkamera und einer homogenen, bevorzugt weißen Beleuchtung, beispielsweise in Form einer Ringbeleuchtung, einer Flächenbeleuchtung, rundherum angeordneten Zeilenbeleuchtung oder einer halben beleuchteten Ulbricht-Kugel, die jeweils diffuses Licht erzeugen, bestehen. Alternativ können die Aufnahmen im Laborbildaufnahmesystem auch dadurch getätigt werden, dass eine Zeilenkamera in Kombination mit einem Schiebetisch eingesetzt wird (wobei dann der Schiebetisch und die Zeilenkamera zu synchronisieren sind). Es können sowohl opake als auch transparente oder semitransparente Gut- und Schlechtobjekte aufgenommen werden. Im Falle von semi-transparenten oder transparenten Objekten kann die Beleuchtung nicht nur in Reflexion, sondern auch in Transmission angeordnet werden.

Bevor die Gut- und die Schlechtobjekte im Laborbildaufnahmesystem aufgenommen werden, erfolgt vorzugsweise eine Kalibrierung, damit die Farbtransformation vom Labor zum Zielsystem (bzw. der Sortieranlage) mit ausreichender bzw. hoher Genauigkeit möglich ist. Eine solche Kalibrierung des Labor- und des Zielsystems ist normalerweise notwendig, da die Farbe eines Objekts durch das Spektrum der Lichtquelle, die spektrale Empfindlichkeit der Kombination Objektiv, Farbfilter und Kamerasensor (nachfolgend auch als spektrale Kameraempfindlichkeit bezeichnet) und die spektrale Absorption bzw. Reflexion des Objekts bestimmt ist. Das Spektrum der Lichtquelle und die spektrale Kameraempfindlichkeit von Labor- und Zielsystem sind im Allgemeinen verschieden, so dass ein und dasselbe Objekt in der Regel farblich unterschiedlich erscheint. Dieser Unterschied muss zum Erlangen einer hinreichenden Genauigkeit der Objektidentifizierung durch die vorbeschriebene Farbtransformation sowie in der Regel auch eine Kalibrierung korrigiert werden.

Die Kalibrierung kann sowohl beim Labor- als auch beim Zielsystem aus ein oder aus zwei Schritten bestehen: In jedem Fall sollte ein sog. Weißabgleich zur Korrektur durchgeführt werden. Bei diesem Schritt macht die Kamera (im Laborsystem und im Zielsystem) eine große Anzahl von Aufnahmen, z.B. 100 bis 1000 einzelne Aufnahmen, von einer weißen Kalibrierfläche bei eingeschalteter diffuser Beleuchtung. Da das Signal-zu-Rausch-Verhältnis mit $\sqrt{N}$ steigt, wobei N der Anzahl an Aufnahmen entspricht, ist ein Wert von mindestens N=100 empfehlenswert. Der Weißabgleich wird durchgeführt, um die Empfindlichkeitsunterschiede der einzelnen Kamerapixel und die Intensitätsschwankungen von der optischen Hauptachse der Objektive zu den Rändern (sog. Vignettierung) zu korrigieren.

In einem zweiten Schritt kann optional eine Dunkelstromkorrektur durchgeführt werden. Aufgrund der heutzutage meist sehr guten Qualität von Kamerasensoren ist dieser Schritt zumindest bei Kameras, die im sichtbaren Bereich arbeiten (also Wellenlängen im Bereich zwischen ca. 380 nm und 750 nm erfassen) oft nicht notwendig. Bei der Dunkelstromkorrektur werden Aufnahmen ohne jeglichen Lichteinfall gemacht. Somit werden nur Signale vom Sensor gemessen, die z.B. durch Elektronenrauschen aufgrund thermischer Effekte entstehen. Der Dunkelstrom wird dann bei der Kalibrierung mit verrechnet nach der Formel $N(i,j)=R(i,j)-d(i,j)/(w(i,j)-d(i,j))$, wobei $N(i,j)$ das normierte Signal des Pixels der i-ten Zeile und der j-ten Spalte ist, $R(i,j)$ das Rohsignal des Pixels ist, $d(i,j)$ der Mittelwert des Dunkelstroms ist und $w(i,j)$ der Mittelwert des Weißwertes des Pixels ist.

Um eine hochgenaue Farbtransformation zu berechnen, können normierte Farbkacheln, zum Beispiel BCRA-Kacheln der British Ceramics Research Association eingesetzt werden. Grundsätzlich ist es jedoch auch möglich, selbst zusammengestellte Farbkacheln zum Bestimmen der Ausgangsfarbwerte für die Farbtransformation einzusetzen. Die Nutzung normierter Farbkacheln ermöglicht aber die Reproduktion und die Vergleichbarkeit von Aufnahmen auch zu einem späteren Zeitpunkt, beispielsweise wenn eigene Farbkacheln sich im Laufe der Zeit verändert haben. Es existieren Farbtafeln mit unterschiedlicher Anzahl verschiedenfarbiger Kacheln, z.B. mit 24, 30 oder auch 140 Kacheln (Gretag Macbeth ColorChecker®). Da es nicht möglich ist, für sämtliche Farbkombinationen (z.B. RGB-Farbkombinationen) einer Kamera im sichtbaren Bereich eine Farbkachel als Referenz aufzunehmen, können wie vorbeschrieben Farbkombinationen ohne vorhandene Referenz interpoliert oder extrapoliert werden. Aus den RGB-Werten von Farbkacheln und den vorbeschriebenen Interpolationen/Extrapolationen kann so eine Look-up-Tabelle (LUT) der Farbtransformation erstellt werden, d.h. eine Tabelle, die für jede mögliche Farbkombination der Flächenkamera beispielsweise die drei nächstgelegenen RGB-Referenzwerte abstandskorrigiert enthält. Wie bereits beschrieben, kann die LUT dabei für sämtliche Farbwerte eines Farbraums (also z.B. für die $256^3$ Farben eines RGB-Farbraumes) berechnet werden. Das Anwenden der Farbtransformation in Form der LUT liefert dann aus einem Farbwert im Laborsystem den entsprechenden Farbwert im Farbsystem der Anlage.

Auch andere Farbräume als der RGB-Farbraum können genutzt werden, z.B. der HSV-Farbraum (mit den Parametern Hue = Farbton, Saturation = Farbsättigung und Value = Helligkeitswert). Allerdings ist der RGB-Farbraum erfindungsgemäß bevorzugt, da die Flächenkameras üblicherweise mit RGB-Filtern vor den Pixeln ausgestattet sind.

Auch gibt es verschiedene Möglichkeiten der vorbeschriebenen Interpolation der Farben. Von Vorteil ist die Verwendung einer Farbtafel mit möglichst vielen verschiedenen Farbkacheln, um möglichst viele Stützpunkte zur Berechnung der Zwischenwerte zu haben. Da jede Kamera einen bestimmten Farbraum abdeckt, die Referenzfarben aber nicht den kompletten äußeren Rand des Farbraums abdecken, ist in der Regel nicht nur eine Interpolation (bei der neu zu bestimmende Farbwerte zwischen Referenzwerten liegen), sondern auch eine Extrapolation von Farbwerten, die außerhalb der Referenzwerte liegen (aber innerhalb des Farbraums der RGB-Kamera) vorteilhaft. Erfindungsgemäß werden im Allgemeinen somit auch Farbwerte extrapoliert, nicht nur interpoliert. Die Extrapolation kann mithilfe nächstgelegener Referenzwerte, die durch ihre euklidische Distanz gewichtet werden, durchgeführt werden. Erfolgt die Sortierung von transparenten oder semi-transparenten Objekten (wie beispielsweise beim Glasrecycling in entsprechenden Recyclinganlagen), so sollten die Farbkacheln zur Berechnung der Farbtransformation bevorzugt transparent sein.

Für die Inspektion und Sortierung unterschiedlichster Objekte wird auch Licht außerhalb des sichtbaren Lichts genutzt. Die erfindungsgemäßen Aufbauten und Verfahren können auch außerhalb des sichtbaren Lichts ausgebildet sein, dabei muss dann jedoch die Lichtquelle entsprechend angepasst werden (ebenso die Objekte zum Bestimmen der Farbtransformation, also die Farbelemente). Zudem muss, sofern die verwendeten optischen Erfassungsvorrichtungen des Laborbildaufnahmesystems und der Anlage außerhalb des sichtbaren Bereichs nicht linear sind, die entsprechende Kennkurve der Sensoren berücksichtigt werden.

Die erfindungsgemäße Look-up-Tabelle LUT für die Farbtransformation kann beispielsweise wie folgt erstellt werden.

Im Laborsystem und im Zielsystem, also dem Sortiersystem, sollten dieselben Vorlagen für Weißabgleich und Farbkalibrierung genutzt werden. Als Farbraum dient z.B. der Rot-Grün-Blau (RGB) Farbraum als natürlicher Farbraum bei Kameras, die auf CCD- oder CMOS-Technologie basieren. Prinzipiell sind hier auch andere Farbräume möglich, wenn vor den Sensoren andere Filter angebracht sind als die weit verbreiteten RGB-Filter.

Nachdem Weißabgleich und ggf. Schwarzabgleich (Dunkelstrommessung) erfolgt sind, existieren nach der Aufnahme der n Farbkacheln 5 RGB-Farbreferenzwerte $f_{zs}(P_{i.zs})$ mit den Koordinaten $p_i = (x_i, y_i, z_i)$ mit $\{p_i\}_{i=1....N}$ im Zielsystem, die sich im Laborsystem i. Allg. an nicht-identischen Koordinaten befinden, oder anders ausgedrückt, der Funktionswert für dieselben Koordinaten ist ein anderer. Die Koordinatensysteme werden als identisch angenommen und erstrecken sich beispielsweise über je 8 Bit im RGB-Farbraum, d. h. dass jede Farbachse 256 Werte besitzt, der Farbraum sich somit über insgesamt ca. 16 Mio. Farbwerte erstreckt.

Für die gelbe Farbkachel des Gretag Macbeth ColorChecker erhält man z. B. im Zielsystem die RGB-Werte (227, 196, 43) und im Laborsystem die RGB-Werte (238, 198, 30). Ein LUT, der auf die im Laborsystem aufgenommenen Bilder angewandt werden muss, würde somit für das RGB-Triple (238, 198, 30) durch das RGB-Tripel des Zielsystem ersetzt. Da jedoch nicht für alle Koordinaten im Farbraum des Laborsystems Referenzwerte im Zielsystem bestehen, wird der LUT nicht eins zu eins aufgebaut, sondern durch Interpolation mittels der N Farbwerte der Farbkacheln ermittelt.

Im ersten Schritt der Farbtransformation und Farbrauminterpolation werden die Farbwerte der N Farbkacheln wie sie im Zielsystem aufgenommen wurden den entsprechenden Koordinaten im Laborsystem zugewiesen. Somit entsteht eine Zuordnung: $f_{zs}(p_{i.zs}) := f_{zs}(p_{izs})$.

Im zweiten Schritt werden die Farbwerte im Laborsystem mithilfe einer Interpolation (und/oder einer Extrapolation; nachfolgend wird jedoch aus Platzgründen lediglich eine Interpolation ausführlicher beschrieben) berechnet, für die es keine Referenzwerte aufgrund der Farbkacheln gibt. Die Interpolation kann auf unterschiedliche Art und Weise durchgeführt werden. Es können die in der bereits erwähnten Schrift von J. M. Kasson et al. beschriebenen dreidimensionalen Interpolationen eingesetzt werden: Dort wird u. a. die trilineare Interpolation vorgestellt, bei der zum einen acht Punkte zur Interpolation benötigt werden und zum anderen die Interpolation für jede Achse unabhängig voneinander erfolgt. Auch wird die PRISM-Interpolation präsentiert, die sechs Punkte zur Interpolation benötigt und eine Dreiecks-Interpolation in zwei Dimensionen enthält sowie eine Interpolation separat in der dritten Dimension. Besonders bevorzugt ist eine tetraedrische Interpolation, da sie die besten Ergebnisse im Vergleich zu den zuvor genannten Verfahren liefert. Für die tetraedrische Interpolation werden nur vier Referenzpunkte benötigt da der zu interpolierende Punkt innerhalb des Tetraeders liegt. Die tetraedrische Interpolation ist für die vorliegende Erfindung sehr gut geeignet. Darüber hinaus gibt es weitere Interpolationsverfahren, die jedoch keine eindeutigen Vorteile gegenüber der tetraedrischen Interpolation besitzen. Zu erwähnen ist in diesem Zusammenhang die Maximum-Entropie-Schätzung (Gupta, M.R.; Gray, R.M., "Color conversions using maximum entropy estimation" Image Processing, 2001. Proceedings. 2001, International Conference on , vol.1, no., pp.118-121 vol.1, 2001) und die Regression über einschließende Nachbarschaftspunkte (Chin, Erika M., Garcia, Eric K. and Gupta, Maya R., "Color management of printers by regression over enclosed neighborhoods", Proc. of the IEEE Intl. Conf. on Image Processing, vol. 2, pp. 161-164, 2007). Beide Verfahren können prinzipiell auch für die vorliegend Erfindung genutzt werden.

Die vorbeschriebene tetraedrische Interpolation ist detailliert in der Schrift von J. M. Kasson et al. und dort insbesondere im Anhang "Three-Dimensional Linear and Multilinear Interpolation Formulas" beschrieben. Übertragen auf die vorliegende Erfindung wird jeder interpolierte Farbwert (R, G, B) für das Zielsystem in den Koordinaten des Laborsystem berechnet:

$$f_{ZS,r}(p_{LS}) = \sum_{i=0}^{3} w_{i,LS} f_{ZS,r}(p_{i,LS}),$$ wobei Index "r" für Rot steht und entsprechende Berechnungen für Grün und Blau durchzuführen sind, der Index LS für Laborsystem und der Index ZS für Zielsystem steht und die Randbedingung $\sum_{i=0}^{3} w_{i,LS} = 1$ gilt, d. h., dass die Gewichtungen in der Summe 1 ergeben. Die Gewichtungen und die geometrische Interpretation bzw. Darstellung ist in der Schrift von J. M. Kasson et al. auf Seite 247 detailliert beschrieben.

Im vorliegenden Beispiel wurde eine Transformation zwischen zwei gleichartigen Farbräumen, hier dem RGB-Farbraum vorgenommen. Das Verfahren ist auch dann anwendbar, wenn die Farbräume, z. B. aufgrund unterschiedlicher Sensoren mit z. B. verschiedenartiger Anzahl an Farbfiltern, verschieden sind.

Dann sollte als Zwischenschritt eine Transformation in einen geräteunabhängigen Farbraum, z. B. CIE XYZ oder L*a*b*, erfolgen, was gängige geräteunabhängige Farbräume sind, für die entsprechende Umrechnungen dem Fachmann bekannt sind.

Sinnvollerweise ist der Gamut des Laborsystems mindestens so umfangreich wie der Gamut des Zielsystems, da sonst ein Farbclipping notwendig wird. Mit Gamut ist der Farbumfang gemeint, der durch die Farbempfindlichkeit der Kamera im Laborsystem und der Kamera im Zielsystem definiert ist.

Hat man die Farbtransformation der Laboraufnahmen für die Anwendung im Zielsystem, also der Sortieranlage, kann man wie folgt vorgehen: Es können Aufnahmen, bevorzugt mehrere, von Gutobjekten und auch von Schlechtobjekten erzeugt werden. So können z. B. von getrockneten Steinpilzen (Gutobjekten) mehrere Aufnahmen erfolgen und zusätzlich von Baumrinde, Steinen, vertrockneten Tannennadeln etc. (Schlechtobjekte). Anschließend werden Farbwert-Histogramme von diesen Aufnahmen erzeugt, wobei der Hintergrund, der z. B. schwarz ist, herausgerechnet wird. Hier sei angemerkt, dass der Hintergrund von Labor- und Zielsystem nicht identisch sein muss, da dies im Nachhinein noch beim Zielsystem problemlos adaptiert werden kann. Mithilfe z.B. einer auf die Farbwert-Histogramme angewandten Bayes'schen Klassifikation und einer zusätzlichen geometrische Analyse von z. B. Fläche, Länge, Streckung etc. kann das Gutprodukt vom Schlechtprodukt unterschieden werden und die verwendeten, an die Anlage zu übermittelnden Parameter können anhand der aufgenommenen Bilder auch getestet werden. Bei der Bayes'schen Klassifikation werden die Farbwert-Histogramme für die Gutobjekte und für die Schlechtobjekte als Basis der Klassifizierung in gut oder schlecht verwendet, indem in Aufnahmen unbekannter, zu klassifizierender Objekte pixelweise überprüft wird, ob das entsprechende Pixel in einem vorher festgelegten Farbwertbereich für gut oder in einem vorher festgelegten Farbwertbereich für schlecht ist. Je nachdem, wie viele Pixel im Bild des unbekannten Objektes als gut bzw. als schlecht erkannt wurden, wird nach vorher erfolgter Schwellwertsetzung für die Mindestanzahl von Pixeln die gut sein müssen, festgelegt, ob das unbekannte Objekt ein Gutobjekt oder ein Schlechtobjekt ist. Siehe hierzu das in der EP 0 661 108 B1 beschriebene Verfahren.

Außerhalb des sichtbaren Bereichs existieren sowohl für den UV-Bereich, ca. 240 - 400 nm, als auch für den NIR-Bereich, ca. 750 - 2500 nm kommerzielle Kalibrierstandards, die ggf. mit Bandpassfiltern, die den Kameras vorgeschaltet sind, kombiniert werden müssen, um eine möglichst große Anzahl an Referenzpunkten zu erhalten. Als Beleuchtungsquellen eignen sich Breitbandquellen, so z. B. Halogenlampen für den NIR-Bereich oder auch Deuteriumlampen für den UV-Bereich. Gegenüber den aus dem Stand der Technik bekannten Verfahren bzw. Vorrichtungen hat die vorliegende Erfindung insbesondere die folgenden Vorteile:

- Die Erfindung kann als Laborgerät (= Laborbildaufnahmesystem) und ebenso als ergänzendes Equipment für eine Sortieranlage (= Anordnung, die ein solches Laborbildaufnahmesystem sowie eine Anlage umfasst, oder ein solches Laborbildaufnahmesystem integrierende Anlage) realisiert werden.

- Vordefinierte Objekte, also z.B. Produkte für die optische Inspektion oder Sortierung können unabhängig von der Anlage eingelernt werden, wodurch z.B. der Betrieb einer Sortieranlage zum Einrichten auf die vordefinierten Objekte nicht unterbrochen werden muss. Somit hat die Erfindung den Vorteil, dass die Produktivität an solchen Anlagen gesteigert wird.

- Durch die Entkopplung des Laborbildaufnahmesystems von der Anlage kann das Einrichten auf die vordefinierten Objekte als separater Arbeitsschritt in einem Labor abseits der Anlage durchgeführt werden: Dort arbeitet in der Regel ausreichend qualifiziertes Fachpersonal, das die notwendigen Kenntnisse über die erforderliche Sortierqualität besitzt. Die vorliegende Erfindung bietet somit den Vorteil einer Qualitätssteigerung bei der Sortierung.

- Durch das Einrichten unabhängig von der Sortieranlage kann ein Hersteller von Sortieranlagen seinen Kunden als Serviceleistung das Einrichten auf die zu sortierenden Produkte anbieten. Die Kunden, die nicht über geeignetes Personal verfügen oder diese Arbeit nicht selbständig durchführen möchten (da es sich oft um Tätigkeiten handelt, die in größeren Zeitabständen durchzuführen sind und somit oft die Übung fehlt), können diese Arbeit auslagern. Die die Farbe (und ggf. auch die geometrischen Größen) der vordefinierten Objekte betreffenden Eigenschaften, die mit dem Laborbildaufnahmesystem bestimmt wurden, können mittels Fernwartung auf das Rechnersystem der Anlage eingespielt werden. Dem Hersteller oder dem Vertreiber von Anlagen bietet sich somit die Möglichkeit, langfristig zusätzliche Serviceleistungen für den Endkunden anzubieten.

- Soll ein und dasselbe Produkt auf unterschiedlichen Sortieranlagen identifiziert werden (z.B. Anlagen, die mit unterschiedlichen Kameras oder auch Beleuchtungen ausgestattet sind), so muss lediglich ein einmaliges Einrichten auf das Produkt erfolgen, wenn die Farbtransformationen für die einzelnen Sortieranlagen einmal bestimmt worden sind.

Die vorliegende Erfindung lässt sich insbesondere für Sortieranlagen von opakem, transparentem oder semi-transparentem, natürlichem wie synthetischem Schüttgut einsetzen. Zum Beispiel können Lebensmittel in jeglicher Schüttgutform optisch identifiziert werden, ebenso Mineralien, Edelsteine, Altglas, Kunststoffe oder Elektronikschrott.

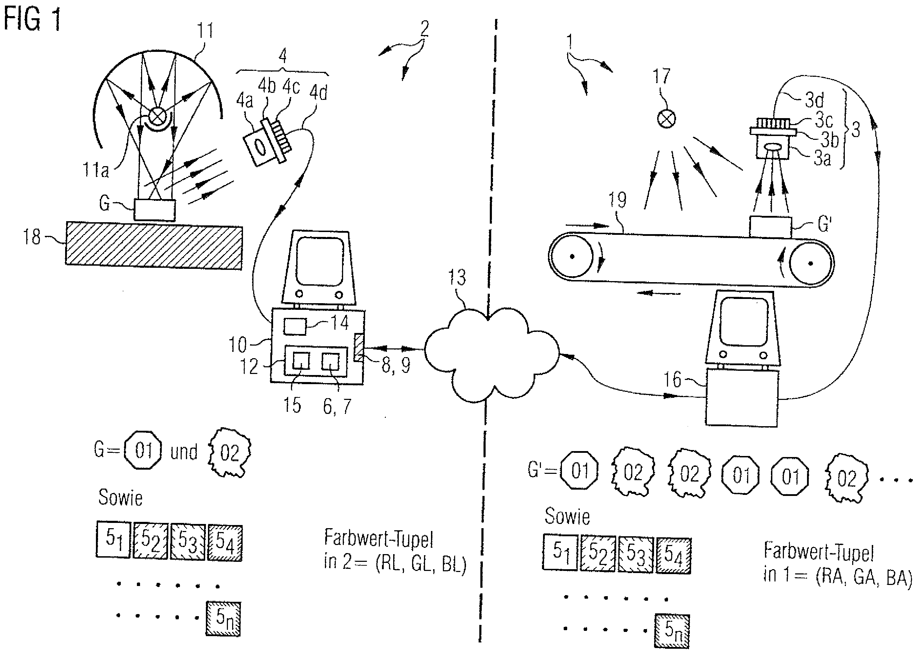

Nachfolgend wird die vorliegende Erfindung anhand eines Ausführungsbeispiels beschrieben. Dabei zeigt Figur 1 dieses Ausführungsbeispiel.

Figur 1 links der gestrichelten Linie zeigt das Laborbildaufnahmesystem 2 einer erfindungsgemäßen Anordnung, die zum Durchführen des erfindungsgemäßen Verfahrens ausgebildet ist. Figur 1 rechts zeigt die Sortieranlage 1 dieser Anordnung. Laborbildaufnahmesystem 2 und Sortieranlage 1 sind räumlich getrennt voneinander positioniert, die entsprechende Datenübermittlung findet daher über das Internet 13 statt, über das die Rechnersysteme 10 (des Laborbildaufnahmesystems) und 16 (der Sortieranlage 1) miteinander verbunden sind.

Das Laborbildaufnahmesystem 2 weist zunächst einen Tisch 18 mit einfarbiger, homogener Oberfläche auf, auf dem als Gegenstand G die Gutobjekte 01, die Schlechtobjekte 02 und die einzelnen Farbkacheln $5_1$ bis $5_n$ (z.B. n = 140) zur Aufnahme mit der Kamera 4 des Laborbildaufnahmesystems 2 positioniert werden können. Zum Erzeugen hinreichend konstanter Beleuchtungsbedingungen während dieser Aufnahmen mit der Kamera 4 ist oberhalb des Tisches 18 eine Weißlichtquelle 11 in Form einer beleuchteten halben Ulbricht-Kugel angeordnet (die Lichterzeugung findet durch eine ringförmige Anordnung der Lichtquellen 11a am Rande der Ulbricht-Kugel statt, deren Licht durch die Reflexionen in der halben Ulbricht-Kugel homogen auf den abzubildenden Gegenstand G gerichtet wird). Um eine möglichst hohe Richtungsunabhängigkeit zu erzielen kann die Kamera 4 auch senkrecht auf das abzubildende Objekt, also den Gegenstand G schauen (in Figur 1 nicht gezeigt) und somit bspw. durch die Mitte der Ringbeleuchtung 11a und auch durch die Mitte der halben Ulbricht-Kugel, also sozusagen durch den Nordpol der halben Ulbricht-Kugel schauen. Dabei kann die Lichtquelle bei der halben Ulbricht-Kugel (nicht gezeigt) nicht in der Mitte, sondern am Innenrand durch viele LEDs realisiert sein.

Das vom Gegenstand G reflektierte Licht wird vom Objektiv 4a der Kamera 4 durch deren RGB-Filter 4b auf den CCD-Sensor 4c der Kamera geführt, wo es in ein entsprechendes elektrisches Signal gewandelt wird und über die bidirektionale Datenleitung 4d der Recheneinheit 10 des Laborbildaufnahmesystems 2, die hier als PC ausgebildet ist, zugeleitet wird. Die bidirektionale Datenleitung 4d dient einerseits dem Übermitteln des Bildsignals von der Kamera 4 an das Rechnersystem 10 und andererseits der Steuerung der Kamera 4 durch das Rechnersystem 10.

Der PC 10 weist neben einem sämtliche Berechnungsschritte des erfindungsgemäßen Verfahrens, die im Laborbildaufnahmesystem 2 erfolgen, durchführenden Mikroprozessor 14 einen Speicher 12 auf, in dem einerseits die Programme 15 zum Durchführen der genannten Verfahrensschritte und andererseits die Farbtransformation 6 in Form einer LUT 7 abgelegt sind. Ein Dateneingang 8 des PC 10 dient dem Datenempfang von der Sortieranlage 1 über das Internet 13, ein Datenausgang 9 des PC 10 dient dem Übermitteln von Daten (insbesondere der die Farbe der Gutobjekte O1 betreffenden Eigenschaften) über das Internet 13 an die Sortieranlage 1.

Die Sortieranlage 1 ist hier lediglich angedeutet: Sie umfasst eine geeignete, z.B. förderbandbasierte Transportvorrichtung 19 zur Beförderung der zu sortierenden (also zu trennenden) Gutobjekte 01 und Schlechtobjekte 02 und eine Ausschleusvorrichtung, die hinter dem Förderband objektabwurfseitig angebracht ist und z. B. mittels einer druckluftausstoßenden Düsenreihe die Schlechtobjekte 02 von den Gutobjekten 01 trennt sowie einer Lichtquelle 17 zum homogenen Ausleuchten desjenigen Bereiches der Transportvorrichtung 19, auf oder hinter dem eine Kameraaufnahme der transportierten Objekte 01, 02 mittels der Kamera 3 der Sortieranlage 1 erfolgt. Vorzugsweise ist die Kamera 3 (die üblicherweise als Zeilenkamera ausgebildet ist) bei förderbandartigem Transport hinter der Abwurfrolle positioniert (hier in der vereinfachten Skizze der Figur 1 nicht gezeigt), so dass sie nicht auf das Förderband schaut, sondern direkt hinter dem Förderband auf einen künstlichen Hintergrund. Damit kann vermieden werden, dass man einen Hintergrund hat, der sich im Laufe der Zeit aufgrund von Verschmutzungen verändert. Neben der Aufnahme derselben Farbkacheln $5_1$ bis $5_n$, die auch im Laborbildaufnahmesystem 2 aufgenommen wurden, werden (hier durch die Gegenstände G' skizziert) somit bei der Sortieranlage im laufenden Betrieb vielfältige, über die Transportvorrichtung 19 laufende Objekte, bei denen die Gutobjekte 01 von den Schlechtobjekten 02 unterschieden werden sollen, mit der Kamera 3 erfasst.

Die über das Objektiv 3a und den RGB-Filter 3b der Kamera 3 erfassten und vom CCD-Array 3c der Kamera 3 in elektrische Signal gewandelten Bildinformationen werden über die bidirektionale Datenleitung 3d (die zur Übermittlung des Bildsignals einerseits und zum Steuern der Kamera 3 andererseits dient) an das Rechnersystem der Sortieranlage 1 übermittelt.

Erfindungsgemäß erfolgen zunächst im Laborbildaufnahmesystem 2 ein Weißabgleich und eine Dunkelstromkorrektur der Kamera 4. Ebenso erfolgen, unabhängig davon, im System der Sortieranlage 1 ein Weißabgleich sowie eine Dunkelstromkorrektur an der Kamera 3.

Anschließend erfolgt die Bestimmung der Farbtransformation 6. Hierzu werden zunächst sämtliche n = 140 Farbkacheln $5_1$ bis $5_n$ mit der Lichtquelle 11 beleuchtet und von der Kamera 4 im Laborbildaufnahmesystem 2 erfasst. Vorzugsweise wird für jede Farbkachel eine Vielzahl von Aufnahmen angefertigt (z.B. 100), anschließend wird das entsprechende RGB-Farbwert-Tupel ($RL_i$, $GL_i$, $BL_i$) (i = Kachelnummer) als Mittelwert bestimmt.

Eine entsprechende Aufnahme der n Kacheln 5 erfolgt anschließend unter Beleuchtung der Lichtquelle 17 mit der Kamera 3 der Sortieranlage 1. Aus diesen Aufnahmen resultieren entsprechend n RGB-Farbwert-Tupel ($RA_i$, $GA_i$, $BA_i$). Die n Farbwert-Tupel ($RL_i$, $GL_i$, $BL_i$) beschreiben somit die Farbwerte der Kacheln 5 im RGB-Farbraum des Laborbildaufnahmesystems 2, die n Farbwert-Tupel ($RA_i$, $GA_i$, $BA_i$) beschreiben die entsprechenden Farbwerte der Kacheln 5 im RGB-Farbraum der Sortieranlage 1.

Nach einer tetraedrischen Interpolation, mit der sämtliche Zwischenwerte bzw. Stützstellen im RGB-Farbraum des Laborsystems 2 berechnet werden, wird die dann sowohl die Farbwerte der n Farbkacheln als auch die interpolierten Farbwerte umfassende und somit den gesamten RGB-Farbraum abdeckende Farbtransformation 6 in Form der LUT 7 im Speicher 12 des PC 10 abgelegt.

Anschließend erfolgt im Laborbildaufnahmesystem 2 ein mehrfaches, z.B. ein hundertfaches, Aufnehmen einer großen Anzahl von Gutprodukten 01 (und ggf. eine entsprechende Mittelwertbildung) sowie getrennt davon ein entsprechendes mehrfaches Aufnehmen der einzelnen zu erwartenden Schlechtprodukte 02. Die Bilder des Gutobjekts 01 und der Schlechtobjekte 02 werden durch geeignete Programme 15 im Speicher 12 des PC 10 der Farbtransformation 6 unter Verwendung der LUT 7 unterworfen. In den farbtransformierten Bildern werden anschließend für die Gutobjekte 01 und für die Schlechtobjekte 02 jeweils Farbwert-Häufigkeitsverteilungen (Histogramme) bestimmt und mit Hilfe der Bayes'schen Klassifikation ausgewertet, um Farbwert-Intervalle für die Gutobjekte 01 und ggf. die Schlechtobjekte 02 zu erhalten. Gegebenenfalls können auch zusätzlich geometrische Analysen durchgeführt werden, um nicht nur die vorgenannten, die Farbe der Gutobjekte 01 betreffenden Eigenschaften zu erhalten, sondern auch weitere, geometrische Kenngrößen der Gutobjekte 01 betreffende Eigenschaften. Anschließend werden die so bestimmten Eigenschaften (also die Farbwert-Häufigkeitsverteilungen und daraus abgeleitete Parameter z.B. in Form der Farbwert-Intervalle für die Gutobjekte 01) über den Datenausgang 9 und das Internet 13 an das Rechnersystem 16 der Sortieranlage 1 übertragen und dort abgelegt.

Im laufenden Betrieb der Sortieranlage 1 können dann die über die Transportvorrichtung 19 transportierten Produkte G' sortiert werden, indem z.B. diejenigen mittels der Kamera 3 erfassten Objekte, die in das an die Anlage 1 übermittelte Farbwert-Intervall im RGB-Farbraum der Sortieranlage 1 fallen, als Gutobjekte 01 identifiziert werden. Andere, z.B. außerhalb der Farbwert-Intervalle liegende Objekte werden als Schlechtobjekte 02 z.B. mittels einer hier nicht gezeigten, stoßweise arbeitenden Luftdüse aus dem Gut- wie Schlechtobjekte umfassenden Produktstrom 01, 02 entfernt.

**Patentansprüche**

1. Verfahren zum Einrichten einer dem optischen Identifizieren vordefinierter Objekte (O1) dienenden, eine optische Erfassungsvorrichtung (3) umfassenden Sortieranlage (1) zum Sortieren verschiedener Objekte (O1, 02) auf die vordefinierten Objekte (O1), wobei abseits der Anlage (1) und räumlich getrennt von der Anlage (1) ein eine optische Erfassungsvorrichtung (4) umfassendes Laborbildaufnahmesystem (2) ausgebildet und positioniert wird, wobei mit Hilfe der optischen Erfassungsvorrichtung (4) des Laborbildaufnahmesystems (2) und der optischen Erfassungsvorrichtung (3) der Anlage (1) eine Farbtransformation (6) zwischen Laborsystem-Farbwerten im Laborbildaufnahmesystem und Anlagen-Farbwerten der Anlage bestimmt wird, wobei vordefinierte Objekte (O1) mit der optischen Erfassungsvorrichtung (4) des Laborbildaufnahmesystems (2) ein- oder mehrfach aufgenommen werden, und

wobei diese im Laborbildaufnahmesystem (2) aufgenommene(n) Aufnahme(n) der Farbtransformation (6) unterworfen wird/werden und in der/den transformierten Aufnahme(n) eine oder mehrere die Farbe der vordefinierten Objekte (O1) betreffende Eigenschaft(en) bestimmt wird/werden oder wobei in dieser/n Aufnahme(n) eine oder mehrere die Farbe der vordefinierten Objekte (O1) betreffende Eigenschaft(en) bestimmt wird/werden und diese bestimmte(n) Eigenschaft(en) der Farbtransformation (6) unterworfen wird/werden.

2. Verfahren nach dem vorhergehenden Anspruch
   ***dadurch gekennzeichnet, dass***
   die Aufnahme(n) im Laborbildaufnahmesystem (2) der Farbtransformation (6) unterworfen wird/werden, im Laborbildaufnahmesystem (2) in der/den transformierten Aufnahme(n) die eine oder mehreren die Farbe der vordefinierten Objekte (O1) betreffende(n) Eigenschaft(en) bestimmt wird/werden und die bestimmte(n) Eigenschaft(en) vom Laborbildaufnahmesystem (2) an die Anlage (1) übermittelt wird/werden
   oder
   dass die im Laborbildaufnahmesystem (2) in der/den Aufnahme(n) bestimmte(n) Eigenschaft(en) im Laborbildaufnahmesystem (2) der Farbtransformation (6) unterworfen wird/werden und die transformierten Eigenschaft(en) vom Laborbildaufnahmesystem (2) an die Anlage (1) übermittelt wird/werden.

3. Verfahren nach einem der vorhergehenden Ansprüche
   ***dadurch gekennzeichnet, dass***
   auch andere, nachfolgend als Schlechtobjekte (02) bezeichnete Objekte als die vordefinierten Objekte (O1) mit der optischen Erfassungsvorrichtung (4) des Laborbildaufnahmesystems (2) ein- oder mehrfach aufgenommen werden, und dass
   entweder auch diese Aufnahme(n) der Schlechtobjekte (02), bevorzugt im Laborbildaufnahmesystem (2), der Farbtransformation (6) unterworfen wird/werden, in dieser/diesen transformierten Aufnahme(n), bevorzugt im Laborbildaufnahmesystem (2), eine oder mehrere die Farbe der Schlechtobjekte (02) betreffende Eigenschaft(en) bestimmt wird/werden und die so bestimmte(n), die Farbe der Schlechtobjekte (02) betreffende(n) Eigenschaft(en) bevorzugt auch vom Laborbildaufnahmesystem (2) an die Anlage (1) übermittelt wird/werden,
   oder auch in dieser/n Aufnahme(n) der Schlechtobjekte (02) eine oder mehrere die Farbe der Schlechtobjekte (02) betreffende Eigenschaft(en) bestimmt wird/werden, bevorzugt im Laborbildaufnahmesystem (2) bestimmt wird/werden, die so bestimmte(n) Eigenschaft(en), bevorzugt im Laborbildaufnahmesystem (2), der Farbtransformation (6) unterworfen wird/werden und diese transformierte(n) Eigenschaft(en) bevorzugt auch vom Laborbildaufnahmesystem (2) an die Anlage (1) übermittelt wird/werden, um es der Anlage (1) zu ermöglichen, anhand der Eigenschaft(en) der vordefinierten Objekte (O1) und derjenigen der Schlechtobjekte (02) zwischen den vordefinierten Objekten (O1) und den Schlechtobjekten (02) zu differenzieren.

4. Verfahren nach einem der vorhergehenden Ansprüche
   ***dadurch gekennzeichnet, dass***
   in der/den Aufnahme(n), bevorzugt in der/den bereits farbtransformierten Aufnahme(n), auch eine oder mehrere (eine) geometrische Kenngröße(n) der vordefinierten Objekte (O1) und/oder der Schlechtobjekte (02) betreffende Eigenschaft(en) bestimmt wird/werden und vom Laborbildaufnahmesystem (2) gegebenenfalls auch an die Anlage (1) übermittelt wird/werden,
   wobei diese Eigenschaft(en) bevorzugt eine Ausdehnung der Objekte (O1, 02) in einer vordefinierten Richtung, eine maximale lineare Ausdehnung der Objekte (O1, O2) und/oder eine Fläche der Objekte (O1, O2) umfasst/en oder ist/sind.

5. Verfahren nach einem der vorhergehenden Ansprüche
   ***dadurch gekennzeichnet, dass***
   eine vordefinierte Anzahl n von unterschiedlichen Farbelementen $(5_1, ..., 5_n)$ mit der optischen Erfassungsvorrichtung (4) des Laborbildaufnahmesystems (2) erfasst wird zum Bestimmen eines Laborsystem-Farbwertes $(RL_i, GL_i, BL_i)$ mit $i=1,...,n$ für jedes dieser n Farbelemente,
   dass dieselben Farbelemente $(5_1, ..., 5_n)$ mit der optischen Erfassungsvorrichtung (3) der Anlage (1) erfasst werden zum Bestimmen eines Anlagen-Farbwertes $(RA_i, GA_i, BA_i)$ mit $i=1,...,n$ für jedes dieser n Farbelemente,
   dass die n Laborsystem-Farbwerte den n Anlagen-Farbwerten so zugeordnet werden, dass für jedes der n Farbelemente der zugehörige Laborsystem-Farbwert und der zugehörige Anlagen-Farbwert einander zugeordnet sind, und
   dass die Farbtransformation (6) zwischen Laborsystem-Farbwerten und Anlagen-Farbwerten von dieser gegenseitigen Zuordnung ausgehend bestimmt wird,
   wobei die unterschiedlichen Farbelemente $(5_1, ..., 5_n)$ bevorzugt farbnormierte Farbelemente, insbesondere farbnormierte keramische Farbkacheln sind.

6. Verfahren nach dem vorhergehenden Anspruch
   ***dadurch gekennzeichnet, dass***
   ausgehend von der gegenseitigen Zuordnung der n Laborsystem- und Anlagen-Farbwerte der Farbelemente $(5_1, ..., 5_n)$ für eine Vielzahl von keiner Farbe eines der Farbelemente entsprechenden Zwischenwerten mittels eines Interpolationsverfahrens, insbesondere eines trilinearen Interpolationsverfahrens, eines prismenbasierten Interpolationsverfahrens oder eines tetraedrischen Interpolationsverfahrens, und/oder eines Extrapolationsverfahrens die gegenseitige Zuordnung zwischen Laborsystem-Farbwert und Anlagen-Farbwert ermittelt wird und dass die Farbtransformation (6) als Menge aller gegenseitig zugeordneten Laborsystem-Farbwerte und Anlagen-Farbwerte von Farbelementen ($5_1$, ..., $5_n$) und von Zwischenwerten bestimmt wird, bevorzugt in Form einer Look-Up-Tabelle (7) bestimmt wird.

7. Verfahren nach einem der vorhergehenden Ansprüche
**dadurch gekennzeichnet, dass**
die Farbtransformation (6) in Form einer/der Look-Up-Tabelle (7) in einem Speicher der Anlage (1) und/oder in einem Speicher (12) des Laborbildaufnahmesystems (2) hinterlegt wird.

8. Verfahren nach einem der vorhergehenden Ansprüche
**dadurch gekennzeichnet, dass**
die Laborsystem-Farbwerte Farbwert-Tupel (RL, GL, BL) eines ersten Farbraums und die Anlagen-Farbwerte Farbwert-Tupel (RA, GA, BA) eines zweiten Farbraums sind,
wobei bevorzugt der erste und der zweite Farbraum entweder identisch sind oder, falls sie nicht identisch sind, der erste Farbraum einen größeren Gamut besitzt als der zweite Farbraum, und/oder wobei der erste und/oder der zweite Farbraum bevorzugt der Rot-Grün-Blau-Farbraum, nachfolgend als RGB-Farbraum bezeichnet, ist/sind.

9. Verfahren nach einem der vorhergehenden Ansprüche
**dadurch gekennzeichnet, dass**
vor dem Bestimmen der Farbtransformation (6) die Anlage (1) und/oder das Laborbildaufnahmesystem (2), bevorzugt die Anlage (1) und das Laborbildaufnahmesystem (2), kalibriert wird/werden,
wobei bevorzugt das Kalibrieren erfolgt, indem mit der optischen Erfassungsvorrichtung (4) des Laborbildaufnahmesystems (2) und/oder mit der optischen Erfassungsvorrichtung der Anlage (1) ein Weißabgleich und bevorzugt darüber hinaus auch eine Dunkelstromkorrektur durchgeführt wird/werden.

10. Verfahren nach einem der vorhergehenden Ansprüche
**dadurch gekennzeichnet, dass**
die die Farbe der vordefinierten Objekte (O1) und/oder der Schlechtobjekte (02) betreffende Eigenschaft(en) umfasst/en oder ist/sind: (eine) Farbwert-Häufigkeitsverteilung(en) in dem/den die vordefinierten Objekte (O1) und/oder die Schlechtobjekte (02) betreffenden Bildbereich(en) der Aufnahme(n) und/oder ein oder mehrere aus dieser/n Farbwert-Häufigkeitsverteilung(en) der vordefinierten Objekte (O1) und/oder der Schlechtobjekte (02) abgeleitete(r) Parameter wie beispielsweise (ein) Farbmittelwert(e), (ein) Farbmedianwert(e), (ein) Farbwertintervall(e), (ein) Farbschwellwert(e) und/oder (ein) Farbgrenzwert (e) .

11. Verfahren nach einem der vorhergehenden Ansprüche
**dadurch gekennzeichnet, dass**
die optische Erfassungsvorrichtung (4) des Laborbildaufnahmesystems (2) und/oder die optische Erfassungsvorrichtung (3) der Anlage (1) eine Kamera, insbesondere eine CCD-Kamera oder eine CMOS-basierte Kamera, umfasst oder ist.

12. Zum Durchführen eines Verfahrens nach einem der vorhergehenden Ansprüche ausgebildetes Laborbildaufnahmesystem (2) umfassend
die optische Erfassungsvorrichtung (4) des Laborbildaufnahmesystems,
einen Dateneingang (8), über den dem Laborbildaufnahmesystem (2) von der abseits des Laborbildaufnahmesystems (2) und räumlich getrennt von dem Laborbildaufnahmesystem (2) ausgebildeten und positionierten, externen Sortieranlage (1) Daten übermittelbar sind, bevorzugt von der optischen Erfassungsvorrichtung (3) der externen Anlage (1) erfasste Bilddaten übermittelbar sind, wobei die Übermittlung bevorzugt drahtlos und/oder über ein Netzwerk (13), insbesondere das Internet, erfolgt,
einen Datenausgang (9), mit dem eine oder mehrere die Farbe der Objekte (O1, O2) betreffende Eigenschaft(en) und/oder eine oder mehrere Aufnahme(n) der Objekte (01,02) vom Laborbildaufnahmesystem an die externe Anlage (1) übermittelbar sind, bevorzugt drahtlos und/oder über das Netzwerk (13), insbesondere das Internet, übermittelbar sind, und
eine mit der optischen Erfassungsvorrichtung (4) des Laborbildaufnahmesystems, dem Dateneingang (8) und dem Datenausgang (9) verbundene, mikroprozessorbasierte (14) Recheneinheit (10) zum Bestimmen der Farbtransformation (6), zum Anwenden der Farbtransformation (6) auf mit der optischen Erfassungsvorrichtung (4) des Laborbildaufnahmesystems gemachte Aufnahmen und/oder auf die Farbe der Objekte (01,02) betreffende Eigenschaften und zum Bestimmen der die Farbe der Objekte (01, 02) betreffenden Eigenschaft(en) in farbtransformierten und/oder in nicht farbtransformierten Aufnahmen.

13. Anordnung umfassend das Laborbildaufnahmesystem (2) nach dem vorhergehenden Anspruch sowie eine abseits des Laborbildaufnahmesystems (2) und räumlich getrennt von dem Laborbildaufnahmesystem (2) ausgebildete Sortieranlage (1) zum Sortieren verschiedener Objekte (O1, O2) samt deren optischer Erfassungsvorrichtung (3).

14. Laborbildaufnahmesystem (2) oder Anordnung nach einem der beiden vorhergehenden Ansprüche *dadurch gekennzeichnet, dass*
das Laborbildaufnahmesystem (2) eine homogenes, diffuses und darüber hinaus bevorzugt auch weißes Licht erzeugende Lichtquelle (11) zum Beleuchten der Objekte (O1, O2) und/oder der Farbelemente $(5_1, ..., 5_n)$ umfasst,
wobei die Lichtquelle (11) bevorzugt in Form einer Ring-, Flächen- oder Zeilenbeleuchtung oder einer halben beleuchteten Ulbricht-Kugel ausgebildet ist.

15. Verwendung eines Verfahrens, eines Laborbildaufnahmesystems oder einer Anordnung nach einem der vorhergehenden Ansprüche zum Sortieren von Objekten (O1, O2) in Form von opakem, transparentem oder semitransparentem Schüttgut beispielsweise in Form von Lebensmitteln, Mineralien, Edelsteinen, Glas, Kunststoff oder Schrott.

**Claims**

1. Method for preparing a sorting plant (1), serving to optically identify predefined objects (OI) and comprising an optical capturing device (3), for sorting different objects (OI, O2), for the predefined objects (OI),
wherein a laboratory image acquisition system (2) comprising an optical capturing device (4) is configured and positioned away from the plant (1) and spatially separated from the plant (1),
wherein, with the aid of the optical capturing device (4) of the laboratory image acquisition system (2) and the optical capturing device (3) of the plant (1), a colour transformation (6) between laboratory system colour values in the laboratory image acquisition system and plant colour values of the plant is determined,
wherein predefined objects (O1) are acquired with the optical capturing device (4) of the laboratory image acquisition system (2) one or more times, and wherein this/these acquisition(s) acquired in the laboratory image acquisition system (2) is/are subjected to the colour transformation (6) and in the transformed acquisition(s) one or more property/properties relating to the colour of the predefined objects (OI) is/are determined or wherein one or more property/properties relating to the colour of the predefined objects (OI) is/are determined in this/these acquisition(s) and this/these determined property/properties is/are subjected to the colour transformation (6).

2. Method according to the preceding claim *characterized in that*
the acquisition(s) in the laboratory image acquisition system (2) is/are subjected to the colour transformation (6), in the laboratory image acquisition system (2) in the transformed acquisition(s) the one or more property/properties relating to the colour of the predefined objects (OI) is/are determined and the determined property/properties is/are transmitted by the laboratory image acquisition system (2) to the plant (1)
or
**in that** the property/properties determined in the laboratory image acquisition system (2) in the acquisition(s) is/are subjected to the colour transformation (6) in the laboratory image acquisition system (2) and the transformed property/properties is/are transmitted from the laboratory image acquisition system (2) to the plant (1).

3. Method according to one of the preceding claims, *characterized in that*
also other objects, referred to below as bad objects (O2), are acquired one or more times as the predefined objects (O1) by the optical capturing device (4) of the laboratory image acquisition system (2), and **in that** either also these acquisition(s) of the bad objects (O2) is/are subjected to the colour transformation (6) preferably in the laboratory image acquisition system (2), in this/these transformed acquisition(s), preferably in the laboratory image acquisition system (2), one or more property/properties relating to the colour of the bad objects (O2) is/are determined and the thus determined property/properties relating to the colour of the bad objects (O2) is/are preferably also transmitted from the laboratory image acquisition system (2) to the plant (1),
or also in this/these acquisition(s) of the bad objects (O2) one or more property/properties relating to the colour of bad objects (O2) is/are determined, preferably in the laboratory image acquisition system (2), the thus determined property/properties is/are subjected to the colour transformation (6), preferably in the laboratory image acquisition system (2), and these transformed property/properties is/are preferably also transmitted from the laboratory image acquisition system (2) to the plant (1),
to enable the plant (1), based on the property/properties of the predefined objects (OI) and that/those of the bad objects (O2), to differentiate between the predefined objects (O1) and the bad objects (O2).

4. Method according to one of the preceding claims *characterized in that*
in the acquisition(s), preferably in the already colour-transformed acquisition(s), also one or more property/properties relating to a geometric parameter or geometric parameters of the predefined objects (OI) and/or of the bad objects (02) is/are determined and is/are transmitted from the laboratory image acquisition system (2) optionally also to the plant (1), wherein this/these property/properties comprises/comprise or is/are preferably an extension of the objects (OI, 02) in a predefined direction, a maximum linear extension of the objects (OI, 02) and/or an area of the objects (OI, 02).

5. Method according to one of the preceding claims *characterized in that* a predefined number n of different colour elements $(5_1, ..., 5_n)$ is captured by the optical capturing device (4) of the laboratory image acquisition system (2) for determining a laboratory system colour value ($RL_i$, $GL_i$, $BL_i$) where i=1, ..., n for each of these n colour elements, in that the same colour elements $(5_1, ..., 5_n)$ are captured by the optical capturing device (3) of the plant (1) for determining a plant colour value ($RA_i$, $GA_i$, $BA_i$) where i=1, ..., n for each of these n colour elements, in that the n laboratory system colour values are assigned to the n plant colour values so that for each of the n colour elements the associated laboratory system colour value and the associated plant colour value are assigned to each other, and in that the colour transformation (6) between laboratory system colour values and plant colour values is determined starting from this mutual assignment, wherein the different colour elements $(5_1, ..., 5_n)$ are preferably colour-normalized colour elements, in particular colour-normalized ceramic colour tiles.

6. Method according to the preceding claim, *characterized in that* starting from the mutual assignment of the n laboratory system and plant colour values of the colour elements $(5_1, ..., 5_n)$ for a large number of intermediate values not corresponding to any colour of one of the colour elements the mutual assignment between the laboratory system colour value and plant colour value is determined by means of an interpolation method, in particular a trilinear interpolation method, a prism-based interpolation method or a tetrahedral interpolation method and/or an extrapolation method, and that the colour transformation (6) is determined as a set of all mutually assigned laboratory system colour values and plant colour values of colour elements $(5_1, ..., 5_n)$ and of intermediate values, preferably in the form of a look-up table (7).

7. Method according to one of the preceding claims, *characterized in that* the colour transformation (6) is stored in the form of a/the look-up table (7) in a memory of the plant (1) and/or in a memory (12) of the laboratory image acquisition system (2).

8. Method according to one of the preceding claims, *characterized in that* the laboratory system colour values are colour value tuples (RL, GL, BL) of a first colour space and the plant colour values are colour value tuples (RA, GA, BA) of a second colour space, wherein preferably, the first and the second colour space are either identical, or, if they are not identical, the first colour space has a larger gamut than the second colour space, and/or wherein the first and/or the second colour space is/are preferably the red-green-blue colour space, referred to below as RGB colour space.

9. Method according to one of the preceding claims *characterized in that* prior to determining the colour transformation (6), the plant (1) and/or the laboratory image acquisition system (2), preferably the plant (1) and the laboratory image acquisition system (2), is/are calibrated, wherein preferably the calibration is performed by carrying out a white balance and preferably, in addition, also a dark current correction using the optical capturing device (4) of the laboratory image acquisition system (2) and/or using the optical capturing device of the plant (1).

10. Method according to one of the preceding claims, *characterized in that* the property/properties relating to the colour of the predefined objects (01) and/or the bad objects (02) comprises/comprise or is/are: (a) colour value frequency distribution(s) in the image region(s) of the acquisition(s) relating to the predefined object(s) (OI) and/or the bad object(s) (02) and/or one or more parameter(s) derived from this/these n colour value frequency distribution(s) of the predefined objects (01) and/or the bad objects (02), such as for example (a) colour mean value(s), (a) colour median value(s), (a) colour value interval(s), (a) colour threshold value(s) and/or (a) colour limit value(s).

11. Method according to one of the preceding claims *characterized in that* the optical capturing device (4) of the laboratory image acquisition system (2) and/or the optical capturing device (3) of the plant (1) comprises or is a camera, in particular a CCD camera or a CMOS-based camera.

12. Laboratory image acquisition system (2) configured for carrying out a method according to one of the preceding claims comprising the optical capturing device (4) of the laboratory image acquisition system,

a data input (8) via which data can be transmitted to the laboratory image acquisition system (2) from the external sorting plant (1) configured and positioned away from the laboratory image acquisition system (2) and spatially separated from the laboratory image acquisition system (2), preferably image data captured by the optical capturing device (3) of the external plant (1) can be transmitted, the transmission preferably being carried out wirelessly and/or via a network (13), in particularly the Internet,

a data output (9), with which one or more property/properties relating to the colour of the objects (OI, 02) and/or one or more acquisition(s) of the objects (01,02) can be transmitted from the laboratory image acquisition system to the external system (1), preferably wirelessly and/or via the network (13), in particular the Internet, and

a microprocessor-based (14) computing unit (10) connected to the optical capturing device (4) of the laboratory image acquisition system, the data input (8) and the data output (9), for determining the colour transformation (6), for applying the colour transformation (6) to acquisitions made with the optical capturing device (4) of the laboratory image acquisition system and/or to properties relating to the colour of the objects (01,02) and for determining the property/properties relating to the colour of the objects (OI, 02) in colour-transformed and/or in non-colour-transformed acquisitions.

13. Arrangement comprising the laboratory image acquisition system (2) according to the preceding claim and a sorting plant (1) configured away from the laboratory image acquisition system (2) and spatially separated from the laboratory acquisition system (2), for sorting different objects (OI, 02), including its optical capturing device (3).

14. Laboratory image acquisition system (2) or arrangement according to one of the two preceding claims, ***characterized in that*** the laboratory image acquisition system (2) comprises a homogeneous, diffuse, and furthermore preferably also white light-generating light source (11) for illuminating the objects (OI, O2) and/or the colour elements ($5_1$, ..., $5_n$), wherein the light source (11) is preferably configured in the form of a ring, area or line illumination or a semi-illuminated Ulbricht sphere.

15. Use of a method, a laboratory image acquisition system or an arrangement according to one of the preceding claims for sorting objects (OI, O2) in the form of opaque, transparent or semi-transparent bulk material, for example in the form of food, minerals, precious stones, glass, plastic or scrap.

**Revendications**

1. Procédé de configuration d'une installation de tri (1) permettant l'identification optique d'objets prédéfinis (O1) et comprenant un dispositif de mesure optique (3), pour le tri de différents objets (O1, O2) parmi les objets prédéfinis (01),

moyennant quoi, sur le côté de l'installation (1) et séparé physiquement de l'installation (1), est réalisé et positionné un système de prise de vues de laboratoire (2) comprenant un dispositif de mesure optique (4),

moyennant quoi, à l'aide du dispositif de mesure optique (4) du système de prise de vues de laboratoire (2) et du dispositif de mesure optique (3) de l'installation (1), une transformation chromatique (6) entre les valeurs chromatiques du système de laboratoire du système de prise de vues de laboratoire et les valeurs chromatiques de l'installation est déterminée,

moyennant quoi des objets prédéfinis (01) sont photographiés une fois ou plusieurs fois avec le dispositif de mesure optique (4) du système de prise de vues de laboratoire (2) et

moyennant quoi ces prises de vues réalisées dans le système de prises de vues de laboratoire (2) sont soumises à la transformation chromatique (6) et dans les prises de vues transformées, une ou plusieurs propriétés concernant la couleur des objets prédéfinis (O1) sont déterminées ou moyennant quoi, dans ces prises de vues, une ou plusieurs propriétés concernant la couleur des objets prédéfinis (01) sont déterminées et ces propriétés déterminées sont soumises à la transformation chromatique (6).

2. Procédé selon la revendication précédente, **caractérisé en ce que** les prises de vues du système de prises de vues de laboratoire (2) sont soumises à la transformation chromatique (6), dans le système de prises de vues de laboratoire (2), dans les prises de vues transformées, une ou plusieurs propriétés concernant la couleur des objets prédéfinis (O1) sont déterminées et les propriétés déterminées sont transmises par le système de prises de vues de laboratoire (2) à l'installation (1)

ou

les propriétés déterminées, dans le système de prises de vues de laboratoire (2), dans les prises de vues sont soumises, dans le système de prises de vues de laboratoire (2), à la transformation chromatique et les propriétés transformées sont transmises par le système de prises de vues de laboratoire (2) à l'installation (1).

3. Procédé selon l'une des revendications précédentes, **caractérisé en ce que**

d'autres objets, appelés par la suite mauvais objets (02) sont photographiés une fois ou plusieurs fois en tant qu'objets prédéfinis (O1) avec le dispositif de mesure optique (4) du système de prises de vues de laboratoire (2) et **en ce que**,

soit ces prises de vues des mauvais objets (02) sont soumises, de préférence dans le système de prises de vues de laboratoire (2), à la transformation chromatique (6), dans ces prises de vues transformées, de préférence dans le système de prises de vues de laboratoire (2), une ou plusieurs propriétés concernant la couleur des mauvais objets (02) sont déterminées et les propriétés concernant la couleur des mauvais objets (02) ainsi déterminées sont de préférence également transmises par le système de prises de vues de laboratoire (2) à l'installation (1),

soit, dans ces prises de vues des mauvais objets (02), une ou plusieurs propriétés concernant la couleur des mauvais objets (02) sont déterminées, de préférence dans le système de prises de vues de laboratoire (2), les propriétés ainsi déterminées sont soumises, de préférence dans le système de prises de vues de laboratoire (2), à la transformation chromatique (6) et ces propriétés transformées sont transmises, de préférence également par le système de prises de vues de laboratoire (2), à l'installation (1),

afin de permettre à l'installation (1) de distinguer, à l'aide des propriétés des objets prédéfinis (01) et de celles des mauvais objets (02), les objets prédéfinis (01) et les mauvais objets (02).

4. Procédé selon l'une des revendications précédentes,
**caractérisé en ce que**
dans les prises de vues, de préférence dans les prises de vues déjà soumises à une transformation chromatique, les propriétés concernant une ou plusieurs grandeurs géométriques caractéristiques des objets prédéfinis (O1) et/ou des mauvais objets (02) sont déterminées et sont transmises le cas échéant également à l'installation (1) par le système de prises de vues de laboratoire (2),
ces propriétés comprenant ou étant de préférence une extension des objets (01, 02) dans une direction prédéfinie, une extension linéaire maximale des objets (01, 02) et/ou une surface des objets (01, 02).

5. Procédé selon l'une des revendications précédentes,
**caractérisé en ce que**
un nombre prédéterminé n d'éléments chromatiques différents ($5_1$, ..., $5_n$) est mesuré avec le dispositif de mesure optique (4) du système de prises de vues de laboratoire (2) afin de déterminer une valeur chromatique du système de laboratoire ($RL_i$, $GL_i$, $BL_i$) avec i = 1, ..., n pour chacun de ces n éléments chromatiques,

les mêmes éléments chromatiques ($5_1$, ..., $5_n$) sont mesurés avec le dispositif de mesure optique (3) de l'installation (1) afin de déterminer une valeur chromatique de l'installation ($RA_i$, $GA_i$, $BA_i$) avec i = 1, ..., n pour chacun de ces n éléments chromatiques,

les n valeurs chromatiques du système de laboratoire sont mis en correspondance avec les n valeurs chromatiques de l'installation de façon à ce que, pour chacun des n éléments chromatiques, la valeur chromatique du système de laboratoire et la valeur chromatique de l'installation soient mises en correspondance et

la transformation chromatique (6) entre les valeurs chromatiques du système de laboratoire et les valeurs chromatiques de l'installation est déterminée à partir de cette mise en correspondance mutuelle, les différents éléments chromatiques ($5_i$, ..., $5_n$) étant de préférence des éléments chromatiques de couleurs normalisées, plus particulièrement des carreaux de céramique de couleurs normalisées.

6. Procédé selon la revendication précédente,
**caractérisé en ce que**
à partir de la mise en correspondance mutuelle des n valeurs chromatiques du système de laboratoire et de l'installation des éléments chromatiques ($5_1$, ..., $5_n$) pour une pluralité de valeurs intermédiaires ne correspondant à aucune couleur des éléments chromatiques, un procédé d'interpolation, plus particulièrement un procédé d'interpolation trilinéaire, un procédé d'interpolation basé sur des prismes ou un procédé d'interpolation tétraédrique et/ou un procédé d'extrapolation permet de déterminer la mise en correspondance mutuelle entre la valeur chromatique du système de laboratoire et la valeur chromatique de l'installation et **en ce que** la transformation chromatique (6) est déterminée comme la quantité de toutes les valeurs chromatiques du système de laboratoire et valeurs chromatiques de l'installation mutuellement mises en correspondance par les éléments chromatiques ($5_i$, ..., $5_n$) et des valeurs intermédiaires, de préférence sous la forme d'une table de correspondance (7).

7. Procédé selon l'une des revendications précédentes,
**caractérisé en ce que**
la transformation chromatique (6) est enregistrée sous la forme d'une / de la table de correspondance (7) dans une mémoire de l'installation (1) et/ou dans une mémoire (12) du système de prise de vues de laboratoire (2).

8. Procédé selon l'une des revendications précédentes,
**caractérisé en ce que**
les valeurs chromatiques du système de laboratoire sont des tuples de valeurs chromatiques (RL, GL, BL) d'un premier espace colorimétrique et les valeurs chromatiques de l'installation sont des tuples de valeurs chromatiques (RA, GA, BA) d'un deuxième espace colorimétrique,

moyennant quoi, de préférence, le premier et le deuxième espace colorimétrique sont identiques soit, s'ils ne sont pas identiques, le premier espace colorimétrique possède une gamme supérieure à celle du deuxième espace colorimétrique et/ou moyennant quoi le premier et/ou le deuxième espace colorimétrique est de préférence l'espace colorimétrique rouge-vert-bleu, appelé par la suite espace colorimétrique RGB.

**9.** Procédé selon l'une des revendications précédentes,

   **caractérisé en ce que**

   avant la détermination de la transformation chromatique (6), l'installation (1) et/ou le système de prises de vues de laboratoire (2), de préférence l'installation (1) et le système de prises de vues de laboratoire (2), sont calibrés,

   moyennant quoi, de préférence, le calibrage a lieu en effectuant, avec le dispositif de mesure optique (4) du système de prises de vues de laboratoire (2) et/ou avec le dispositif de mesure optique (3) de l'installation (1), une balance des blancs et de préférence également une correction des courants d'obscurité.

**10.** Procédé selon l'une des revendications précédentes,

   **caractérisé en ce que**

   les propriétés concernant la couleur des objets prédéfinis (01) et/ou des mauvais objets (02) comprennent ou sont : une ou des répartition(s) de fréquences de couleurs dans les zones d'images de prises de vues concernant les objets prédéfinis (01) et/ou les mauvais objets (02) et/ou un ou plusieurs paramètres dérivé(s) de ces/cette répartition(s) de fréquences de couleur des objets prédéfinis (O1) et/ou des mauvais objets (02), par exemple une ou des valeurs chromatiques moyennes, une ou des valeur(s) chromatique(s) médiane(s), une ou des valeurs d'intervalle chromatique, une ou des valeur(s) de seuil de couleur(s) et/ou une ou des valeur(s) chromatique(s) limite(s).

**11.** Procédé selon l'une des revendications précédentes,

   **caractérisé en ce que**

   le dispositif de mesure optique (4) du système de prises de vues de laboratoire (2) et/ou le dispositif de mesure optique (3) de l'installation (1) comprend ou est une caméra, plus particulièrement une caméra CCD ou une caméra basée sur CMOS.

**12.** Système de prises de vues de laboratoire (2) conçu pour l'exécution d'un procédé selon l'une des revendications précédentes, comprenant :

   le dispositif de mesure optique (4) du système de prises de vues de laboratoire,

   une entrée de données (8), par l'intermédiaire de laquelle des données peuvent être transmises par l'installation de tri (1) externe réalisée et positionnée sur le côté du système de prises de vues de laboratoire (2) et séparée physiquement du système de prises de vues de laboratoire (2), de préférence des données d'images relevées par le dispositif de mesure optique (3) de l'installation externe (1) peuvent être transmises, la transmission s'effectuant de préférence sans fil et/ou par l'intermédiaire d'un réseau (13), plus particulièrement Internet,

   une sortie de données (9) avec laquelle une ou plusieurs propriété(s) concernant la couleur des objets (01, 02) et/ou une ou plusieurs prise(s) de vue(s) des objets (01, 02) peuvent être transmises par le système de prises de vues de laboratoire à l'installation externe (1), de préférence sans fil et/ou par l'intermédiaire du réseau (13), plus particulièrement par Internet et

   une unité de calcul (10), basée sur un microprocesseur, connectée au dispositif de mesure optique (4) du système de prises de vues de laboratoire, l'entrée de données (8) et la sortie de données (9), pour la détermination de la transformation chromatique (6), pour l'application de la transformation chromatique (6) aux prises de vues effectuées avec le dispositif de mesure optique (4) du système de prises de vues de laboratoire et/ou aux propriétés concernant la couleur des objets (01, 02) et pour la détermination des/de la propriété(s) concernant la couleur des objets (O1, 02) dans des prises de vues transformées chromatiquement et/ou non transformées chromatiquement.

**13.** Dispositif comprenant le système de prises de vues de laboratoire (2) selon la revendication précédente ainsi qu'une installation de tri (1) disposée sur le côté du système de prises de vues de laboratoire (2) et séparée physiquement du système de prises de vues de laboratoire (2), pour le tri de différents objets (01, 02), avec son dispositif de mesure optique (3).

**14.** Système de prises de vues de laboratoire (2) ou dispositif selon l'une des deux revendications précédentes,

   **caractérisé en ce que**

   le système de prises de vues de laboratoire (2) comprend une source de lumière (11) générant une lumière homogène, diffuse et en outre de préférence également blanche pour éclairer les objets (01, 02) et/ou les éléments chromatiques $(5_1, ..., 5_n)$,

   la source de lumière (11) étant conçue de préférence sous la forme d'un éclairage annulaire, plat ou en ligne ou d'une sphère d'Ulbricht à demi éclairée.

15. Utilisation d'un procédé, d'un système de prises de vues de laboratoire (2) ou d'un dispositif selon l'une des revendications précédentes pour le tri d'objets (01, 02) sous la forme d'un produit en vrac opaque, transparent ou semi-transparent, par exemple sous la forme d'aliments, de minéraux, de pierres précieuses, de verre, de matières plastiques ou de ferraille.

FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010048765 A1

- EP 0661108 B1

**In der Beschreibung aufgeführte Nicht-Patentliteratur**

- **XIUQEN RAO ; YIBIN YING.** Optical Sensors and Sensing Systems for Natural Re sources and Food Safety and Quality. *proc. of SPIE,* 2005, vol. 5996, 59960S
- **L. LOONA ; L. RUIZ-GARCIA ; L. BODRIA ; R. GUIDETTI.** Automatic Idenficiation of Defects on a Shell through a Multi-Spectral Vision System. *Food Bioprocess Technol,* 2012, vol. 5, 3042-3050
- **J. M. KASSON ; S. I. NIN ; W. PLOUFFE ; J. L. HAFNER.** Performing color space conversions with three-dimensional linear interpolation. *Journal of Electronic Imaging,* Juli 1995, vol. 4 (3), 226-250

- **GUPTA, M.R. ; GRAY, R.M.** Color conversions using maximum entropy estimation. *Image Processing, 2001. Proceedings. 2001, International Conference on,* 2001, vol. 1, 118-121
- **CHIN ; ERIKA M. ; GARCIA ; ERIC K. ; GUPTA ; MAYA R.** Color management of printers by regression over enclosed neighborhoods. *Proc. of the IEEE Intl. Conf. on Image Processing,* 2007, vol. 2, 161-164